# EUROPEAN PATENT APPLICATION

(11) **EP 4 787 128 A1**
(43) Date of publication of application: **05.08.2026**
(21) Application number: 26154914.1
(22) Date of filing: 29.01.2026
(51) Int. Cl.: G06F 3/01

(54) **TECHNIQUES FOR SWITCHING BETWEEN A DISPLAY MODE AND A DISPLAYLESS MODE AT A HEAD-WEARABLE DEVICE, AND DEVICES AND METHODS OF USE THEREOF**

(30) Priority: 31.01.2025 US 202563752499 P; 08.07.2025 US 202563840575 P; 23.01.2026 US 202619458549
(71) Applicant: Meta Platforms Technologies, LLC, Menlo Park, CA 94025 (US)
(72) Inventor: EYAL, Yfat, Menlo Park, 94025 (US); GARCIA, Vanessa Michelle, Menlo Park, 94025 (US); AWASTHI, Anurag, Menlo Park, 94025 (US); CHEN, Tarry, Menlo Park, 94025 (US); KO, Hayson, Menlo Park, 94025 (US); LAZAREWICZ, Maciej, Menlo Park, 94025 (US); RAMNATH, Krishnan, Menlo Park, 94025 (US)
(74) Representative: Murgitroyd & Company

(57) **Abstract**

A method of automatically switching a head-wearable device from a display state to a displayless state in accordance with a determination that a display suppression condition is present is described. The method includes, while the head-wearable device is in a display state: (i) obtaining a first instruction, (ii) causing the head-wearable device to present a first response, based on the first instruction, at a display of the head-wearable device, and (iii) in accordance with a determination that a display suppression condition is present, causing the head-wearable device to enter a displayless state. The method further includes, while the head-wearable device is in the displayless state: (i) obtaining a second instruction, (ii) causing the head-wearable device to present a second response, based on the second instruction, at a speaker of the head-wearable device, and (iii) in response to a wake command, causing the head-wearable device to enter the display state.

## Description

### RELATED APPLICATION

This application claims priority to U.S. Provisional Application Serial No. 63/752,499, filed January 31, 2025, entitled "TECHNIQUES FOR SWITCHING BETWEEN A DISPLAY MODE AND A DISPLAYLESS MODE AT A HEAD-WEARABLE DEVICE, AND DEVICES AND METHODS OF USE THEREOF" and U.S. Provisional Application Serial No. 63/840,575, filed July 8, 2025, entitled "TECHNIQUES FOR SWITCHING BETWEEN A DISPLAY MODE AND A DISPLAYLESS MODE AT A HEAD-WEARABLE DEVICE, AND DEVICES AND METHODS OF USE THEREOF" which are both incorporated herein by reference.

### TECHNICAL FIELD

This relates generally to extended-reality (XR) devices, and techniques for switching between a display mode (wherein the display of the XR device is on) and a displayless mode (wherein the display of the XR device is off).

### BACKGROUND

Extended-reality (XR) devices allow user to have information presented to them immediately by presenting the information in their field of vision. XR devices, and in particular augmented-reality devices, are worn by users in everyday environments, while on-the-go, and in public places. XR devices can cause issues by cluttering a user's field of vision by presenting unnecessary and/or obstructive XR elements at the display(s) of the XR devices. Thus, there is a desire for the XR devices to present information at the display(s) only when the visual presentation is necessary and/or when the visual presentation is quicker and/or more convenient for the user that an audio presentation of the information. The XR device could also predict what information may be most relevant to the user, such that the user needs to spend less time interacting with the display of the XR device to accomplish their desired task(s). Additionally there are situations when presenting any XR elements to the user will cause safety issues (e.g., while the user is driving). Also, presenting information at the display of the head-wearable as little as necessary is desirable to lengthen a battery life of the XR device, as presenting at the display consumes more power than presenting at the speakers of the XR device.

As such, there is a need to address one or more of the above-identified challenges. A brief summary of solutions to the issues noted above are described below.

### SUMMARY

One example of a head-wearable device automatically switching to a display state in accordance with a determination that an additional user input is required to complete one or more tasks is described herein. This example head-wearable device includes one or more cameras, one or more displays (e.g., placed behind one or more lenses), one or more speakers, one or more microphones, and one or more programs, where the one or more programs are stored in memory and configured to be executed by one or more processors while the head-wearable device is worn by a user. The one or more programs including instructions for performing operations. The operations include, while the head-wearable device is in a displayless state, wherein a display of the head-wearable device is off while in the head-wearable device is in the displayless state: (i) in response to an initial user input, (e.g., a voice command, a hand gesture, a gaze gesture, etc.) performed by the user, determining one or more tasks to be performed based on the initial user input and (ii) in accordance with a determination that a follow-up user input (e.g., a confirmation and/or a disambiguation) is required to complete the one or more tasks, causing the head-wearable device to enter a display. The operations further include, after the head-wearable device enters the display state, wherein the display of the head-wearable device is on while in the head-wearable device is in the display state: (i) causing the display of the head-wearable device to present a prompt (e.g., an audio prompt and/or a visual prompt) to the user to perform the follow-up user input and (ii) in response to a response user input (e.g., a confirmation command and/or a disambiguation command) performed by the user, performing the one or more tasks based on the first user input and the response user input.

A second example of a head-wearable device, upon switching from a displayless state to a display state, contextually displaying a UI associated with one or more tasks performed while the head-wearable device was in the displayless state is described herein. This example head-wearable device includes one or more cameras, one or more displays (e.g., placed behind one or more lenses), one or more speakers, one or more microphones, and one or more programs, where the one or more programs are stored in memory and configured to be executed by one or more processors while the head-wearable device is worn by a user. The one or more programs including instructions for performing operations. The operations include, while the head-wearable device is in a displayless state, wherein a display of the head-wearable device is off while in the head-wearable device is in the displayless state: (i) obtaining an instruction (e.g., a voice command, a hand gesture, a gaze gesture, etc), (ii) performing one or more tasks based on the instruction), and (iii) in response to a wake command (e.g., a voice command and/or a hand gesture), performed by the user, causing the head-wearable device to enter a display state. The operations further include, after the head-wearable device enters the display state, wherein the display of the head-wearable device is on while in the head-wearable device is in the display state, causing the display of the head-wearable device to present a user interface associated with the one or more tasks.

A third example of a head-wearable device automatically switching from a display state to a displayless state in accordance with a determination that a display suppression condition is present is described herein. This example head-wearable device includes one or more cameras, one or more displays (e.g., placed behind one or more lenses), one or more speakers, one or more microphones, and one or more programs, where the one or more programs are stored in memory and configured to be executed by one or more processors while the head-wearable device is worn by a user. The one or more programs including instructions for performing operations. The operations include, while the head-wearable device is in a display state, wherein the display of the head-wearable device is on while in the head-wearable device is in the display state: (i) obtaining a first instruction (e.g., a first command performed by the user, a first application instruction from an application executed at the head-wearable device, and/or a first incoming instruction from another device, communicatively coupled to the head-wearable device), (ii) causing the head-wearable device to present a first response (e.g., a visual response), based on the first instruction, at the display of the head-wearable device, and (iii) in accordance with a determination, at a first point in time, that a display suppression condition (e.g., a safety display suppression condition, a attention display suppression condition, and/or a user-determined display suppression condition) is present, causing the head-wearable device to enter a displayless state. The operations further include, while the head-wearable device is in the displayless state, wherein the display of the head-wearable device is off while in the head-wearable device is in the displayless state: (i) obtaining a second instruction (e.g., a first command performed by the user, a first application instruction from an application executed at the head-wearable device, and/or a first incoming instruction from another device, communicatively coupled to the head-wearable device), (ii) causing the head-wearable device to present a second response (e.g., an audio response), based on the second instruction, at the speaker of the head-wearable device, and (iii) in response to a wake command (e.g., a voice command and/or a hand gesture), performed by the user at a second point in time, causing the head-wearable device to enter the display state.

Instructions that cause performance of the methods and operations described herein can be stored on a non-transitory computer readable storage medium. The non-transitory computer-readable storage medium can be included on a single electronic device or spread across multiple electronic devices of a system (computing system). A non-exhaustive of list of electronic devices that can either alone or in combination (e.g., a system) perform the method and operations described herein include an extended-reality (XR) headset/glasses (e.g., a mixed-reality (MR) headset or a pair of augmented-reality (AR) glasses as two examples), a wrist-wearable device, an intermediary processing device, a smart textile-based garment, etc. For instance, the instructions can be stored on a pair of AR glasses or can be stored on a combination of a pair of AR glasses and an associated input device (e.g., a wrist-wearable device) such that instructions for causing detection of input operations can be performed at the input device and instructions for causing changes to a displayed user interface in response to those input operations can be performed at the pair of AR glasses. The devices and systems described herein can be configured to be used in conjunction with methods and operations for providing an XR experience. The methods and operations for providing an XR experience can be stored on a non-transitory computer-readable storage medium.

It follows that in a possible implementation of the invention, a non-transitory, computer-readable storage medium is provided including executable instructions that, when executed by one or more processors, cause the one or more processors to, while a head-wearable device, including a display and a speaker, is worn by a user:
while the head-wearable device is in a display state, wherein the display of the head-wearable device is on while the head-wearable device is in the display state: obtain a first instruction; cause the display of the head-wearable device to present a visual response based on the first instruction;
and in accordance with a determination, at a first point in time, that a display suppression condition is present, cause the head-wearable device to enter a displayless state;
while the head-wearable device is in the displayless state, wherein the display of the head-wearable device is off while the head-wearable device is in the displayless state: obtain a second instruction; cause the speaker of the head-wearable device to present a nonvisual response based on the second instruction; and in response to a wake command, performed by the user at a second point in time, cause the head-wearable device to reenter the display state.

In embodiments, the executable instructions further cause the one or more processors to, while the head-wearable device is worn by the user, while the head-wearable device is in the display state: obtain another instruction, distinct from the first instruction; cause the display of the head-wearable device to present another visual response, distinct from the visual response, based on the first instruction.

In embodiments, the executable instructions further cause the one or more processors to, while the head-wearable device is worn by the user, while the head-wearable device is in the displayless state: obtain an additional instruction, distinct from the second instruction; cause the display of the head-wearable device to present an additional nonvisual response, distinct from the nonvisual response, based on the additional instruction.

In embodiments, the causing the head-wearable device to reenter the display state is further in accordance with a determination, at the second point in time, that the display suppression condition is not present.

In embodiments, the executable instructions further cause the one or more processors to, while the head-wearable device is worn by the user, while the head-wearable device is in the display state: in accordance with the determination, at the first point in time, that the display suppression condition is present, cause the head-wearable device to present a switch-off prompt, indicating to the user to perform a sleep command; and wherein the causing the head-wearable device to enter the displayless state is further in accordance with a determination that the user has performed the sleep command.

In embodiments, the executable instructions further cause the one or more processors to, while the head-wearable device is worn by the user, while the head-wearable device is in the displayless state: in accordance with the determination, at the second point in time, that the display suppression condition is not present, cause the head-wearable device to present a switch-on prompt, indicating, to the user, to perform the wake command.

In embodiments, the executable instructions further cause the one or more processors to, while the head-wearable device is worn by the user, while the head-wearable device is in the display state: after obtaining the first instruction, perform one or more first tasks based on the first instruction, wherein the visual response is further based on the one or more first tasks; and while the head-wearable device is in the displayless state: cause the speaker of the head-wearable device to present a second nonvisual response based on the first instruction and the one or more first tasks.

In embodiments, the executable instructions further cause the one or more processors to, while the head-wearable device is worn by the user, while the head-wearable device is in the displayless state: after obtaining the second instruction, perform one or more second tasks based on the second instruction, wherein the nonvisual response is further based on the one or more second tasks; and after causing the head-wearable device to reenter the display state: cause the display of the head-wearable device to present a second visual response based on the second instruction and the one or second first tasks.

In embodiments, the first instruction is one or more of: a first command performed by the user; a first application instruction from an application executed at the head-wearable device; and a first incoming instruction from another device, communicatively coupled to the head-wearable device; and the second instruction is one or more of: a second command performed by the user; a second application instruction from an application executed at the head-wearable device; and a second incoming instruction from another device, communicatively coupled to the head-wearable device.

In embodiments, the display suppression condition is one or more of: a safety display suppression condition; an attention display suppression condition; and a user-determined display suppression condition.

In embodiments, the determination that the display suppression condition is present is based on one or more of: image data captured at one or more forward-facing cameras of the head-wearable device; location data from a global positioning system device associated with the user; and inertial measurement unit (IMU) data from an IMU sensor associated with the user.

In embodiments, the determination that the display suppression condition is present includes a determination of whether the user is driving a car.

In embodiments, the determination that the display suppression condition is present includes a determination that the user is not in a passenger seat of the car.

In embodiments, the determination that the display suppression condition is present includes a determination that the user is approaching an object or another person.

In embodiments, the first point in time is one or more of: a time at a predetermined interval; a time when the first instruction is received; and a time when one or more sensors determine that the suppression condition is present.

In embodiments, the executable instructions further cause the one or more processors to, while the head-wearable device is worn by the user, while the head-wearable device is in the displayless state: after obtaining the second instruction, causing another speaker, communicatively coupled to the head-wearable device, to present the nonvisual response based on the second instruction.

By analogy in another possible implementation of the invention, a method comprises: while a head-wearable device, including a display and a speaker, is worn by a user:
while the head-wearable device is in a display state, wherein the display of the head-wearable device is on while the head-wearable device is in the display state: receiving a first instruction; presenting a visual response based on the first instruction at the display of the head-wearable device; and in accordance with a determination, at a first point in time, that a display suppression condition is present, causing the head-wearable device to enter a displayless state;
while the head-wearable device is in the displayless state, wherein the display of the head-wearable device is off while the head-wearable device is in the displayless state: receiving a second instruction; presenting a nonvisual response based on the second instruction at the speaker of the head-wearable device; and in response to a wake command, performed by the user at a second point in time, causing the head-wearable device to reenter the display state.

In embodiments, the method further comprises, while the head-wearable device is worn by the user, while the head-wearable device is in the display state: receiving another instruction, distinct from the first instruction; causing the display of the head-wearable device to present another visual response, distinct from the visual response, based on the first instruction.

In embodiments, the method further comprises, while the head-wearable device is worn by the user, while the head-wearable device is in the displayless state: receiving an additional instruction, distinct from the second instruction; causing the display of the head-wearable device to present an additional nonvisual response, distinct from the nonvisual response, based on the additional instruction.

In embodiments, the causing the head-wearable device to reenter the display state is further in accordance with a determination, at the second point in time, that the display suppression condition is not present.

In embodiments, the method further comprises, while the head-wearable device is worn by the user, while the head-wearable device is in the display state: in accordance with the determination, at the first point in time, that the display suppression condition is present, causing the head-wearable device to present a switch-off prompt, indicating to the user to perform a sleep command; and wherein the causing the head-wearable device to enter the displayless state is further in accordance with a determination that the user has performed the sleep command.

In embodiments, the method further comprises, while the head-wearable device is worn by the user, while the head-wearable device is in the displayless state: in accordance with the determination, at the second point in time, that the display suppression condition is not present, causing the head-wearable device to present a switch-on prompt, indicating, to the user, to perform the wake command.

In embodiments, the method further comprises, while the head-wearable device is worn by the user, while the head-wearable device is in the display state: after receiving the first instruction, performing one or more first tasks based on the first instruction, wherein the visual response is further based on the one or more first tasks; and while the head-wearable device is in the displayless state: causing the speaker of the head-wearable device to present a second nonvisual response based on the first instruction and the one or more first tasks.

In embodiments, the method further comprises, while the head-wearable device is worn by the user, while the head-wearable device is in the displayless state: after receiving the second instruction, performing one or more second tasks based on the second instruction, wherein the nonvisual response is further based on the one or more second tasks; and after causing the head-wearable device to reenter the display state: causing the display of the head-wearable device to present a second visual response based on the second instruction and the one or second first tasks.

In embodiments, the first instruction is one or more of: a first command performed by the user; a first application instruction from an application executed at the head-wearable device; and a first incoming instruction from another device, communicatively coupled to the head-wearable device; and the second instruction is one or more of: a second command performed by the user; a second application instruction from an application executed at the head-wearable device; and a second incoming instruction from another device, communicatively coupled to the head-wearable device.

In embodiments, the display suppression condition is one or more of: a safety display suppression condition; an attention display suppression condition; and a user-determined display suppression condition.

In embodiments, the determination that the display suppression condition is present is based on one or more of: image data captured at one or more forward-facing cameras of the head-wearable device; location data from a global positioning system device associated with the user; and inertial measurement unit (IMU) data from an IMU sensor associated with the user.

In embodiments, the determination that the display suppression condition is present includes a determination of whether the user is driving a car.

In embodiments, the determination that the display suppression condition is present includes a determination that the user is not in a passenger seat of the car.

In embodiments, the determination that the display suppression condition is present includes a determination that the user is approaching an object or another person.

In embodiments, the first point in time is one or more of: a time at a predetermined interval; a time when the first instruction is received; and a time when one or more sensors determine that the suppression condition is present.

In embodiments, the method further comprises, while the head-wearable device is worn by the user, while the head-wearable device is in the displayless state: after receiving the second instruction, causing another speaker, communicatively coupled to the head-wearable device, to present the nonvisual response based on the second instruction.

By analogy in another possible implementation of the invention, a system comprises: a head-wearable device including a display and a speaker; and one or more processors configured to, while the head-wearable device is worn by a user: while the head-wearable device is in a display state, wherein the display of the head-wearable device is on while in the head-wearable device is in the display state: obtain a first instruction; cause the display of the head-wearable device to present a visual response based on the first instruction; and in accordance with a determination, at a first point in time, that a display suppression condition is present, cause the head-wearable device to enter a displayless state; while the head-wearable device is in the displayless state, wherein the display of the head-wearable device is off while in the head-wearable device is in the displayless state: obtain a second instruction; cause the speaker of the head-wearable device to present a nonvisual response based on the second instruction; and in response to a wake command, performed by the user at a second point in time, cause the head-wearable device to reenter the display state.

Thus, the system is operable to implement the method, and in particular includes one or more processors configured to, while the head-wearable device is worn by a user, perform the method, and preferred features of the system will be understood by analogy.

Similarly, the non-transitory, computer-readable storage medium is configured to perform the method in association with a head-wearable device, including a display and a speaker, and in particular includes executable instructions that, when executed by one or more processors, cause the one or more processors to, while a head-wearable device, including a display and a speaker, is worn by a user perform the method, and preferred features of the system will be understood by analogy.

Similarly, in a further possible implementation of the invention, a computer program product may be provided comprising instructions that, when executed on a computer, case the computer to perform a method for operating a head-wearable device, including a display and a speaker, the method being as herein described.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A-1C illustrate a user interacting with a head-wearable device in a displayless mode, in accordance with some embodiments.
Figures 2A-2C illustrate the head-wearable device switching from the displayless mode to a display mode to confirm a user command, in accordance with some embodiments.
Figures 3A-3C illustrate the head-wearable device switching from the displayless mode to the display more to disambiguate a user command, in accordance with some embodiments.
Figures 4A-4D illustrate the head-wearable device switching to the display mode in response to a wake command and automatically switching back to the displayless mode, in accordance with some embodiments.
Figures 5A-5D illustrate the head-wearable device switching to the display mode in response to a wake command and automatically switching back to the displayless mode, in accordance with some embodiments.
Figures 6A-6D illustrate the head-wearable device switching to the display mode in response to a wake command and switching back to the displayless mode in response to a sleep command, in accordance with some embodiments.
Figures 7A-7D illustrate the head-wearable device automatically switching from the display mode to the displayless mode based on a determination that a display suppression condition is present, in accordance with some embodiments.
Figures 8A-8D illustrate the head-wearable device prompting the user to switch the head-wearable device from the display mode to the displayless mode based on a determination that another display suppression condition is present, in accordance with some embodiments.
Figure 9A illustrates an example method flow chart for a head-wearable device automatically switching to a display state in accordance with a determination that an additional user input is required to complete one or more task, in accordance with some embodiments.
Figure 9B illustrates an example method flow chart for a head-wearable device, upon switching from a displayless state to a display state, contextually displaying a UI associated with one or more tasks performed while the head-wearable device was in the displayless state, in accordance with some embodiments.
Figure 9C illustrates an example method flow chart for a head-wearable device automatically switching from a display state to a displayless state in accordance with a determination that a display suppression condition is present, in accordance with some embodiments.
Figures 10A 10B, 10C-1, and 10C-2 illustrate example MR and AR systems, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

### Overview

Embodiments of this disclosure can include or be implemented in conjunction with various types of extended-realities (XRs) such as mixed-reality (MR) and augmented-reality (AR) systems. MRs and ARs, as described herein, are any superimposed functionality and/or sensory-detectable presentation provided by MR and AR systems within a user's physical surroundings. Such MRs can include and/or represent virtual realities (VRs) and VRs in which at least some aspects of the surrounding environment are reconstructed within the virtual environment (e.g., displaying virtual reconstructions of physical objects in a physical environment to avoid the user colliding with the physical objects in a surrounding physical environment). In the case of MRs, the surrounding environment that is presented through a display is captured via one or more sensors configured to capture the surrounding environment (e.g., a camera sensor, time-of-flight (ToF) sensor). While a wearer of an MR headset can see the surrounding environment in full detail, they are seeing a reconstruction of the environment reproduced using data from the one or more sensors (i.e., the physical objects are not directly viewed by the user). An MR headset can also forgo displaying reconstructions of objects in the physical environment, thereby providing a user with an entirely VR experience. An AR system, on the other hand, provides an experience in which information is provided, e.g., through the use of a waveguide, in conjunction with the direct viewing of at least some of the surrounding environment through a transparent or semi-transparent waveguide(s) and/or lens(es) of the AR glasses. Throughout this application, the term "extended reality (XR)" is used as a catchall term to cover both ARs and MRs. In addition, this application also uses, at times, a head-wearable device or headset device as a catchall term that covers XR headsets such as AR glasses and MR headsets.

As alluded to above, an MR environment, as described herein, can include, but is not limited to, non-immersive, semi-immersive, and fully immersive VR environments. As also alluded to above, AR environments can include marker-based AR environments, markerless AR environments, location-based AR environments, and projection-based AR environments. The above descriptions are not exhaustive and any other environment that allows for intentional environmental lighting to pass through to the user would fall within the scope of an AR, and any other environment that does not allow for intentional environmental lighting to pass through to the user would fall within the scope of an MR.

The AR and MR content can include video, audio, haptic events, sensory events, or some combination thereof, any of which can be presented in a single channel or in multiple channels (such as stereo video that produces a three-dimensional effect to a viewer). Additionally, AR and MR can also be associated with applications, products, accessories, services, or some combination thereof, which are used, for example, to create content in an AR or MR environment and/or are otherwise used in (e.g., to perform activities in) AR and MR environments.

Interacting with these AR and MR environments described herein can occur using multiple different modalities and the resulting outputs can also occur across multiple different modalities. In one example AR or MR system, a user can perform a swiping in-air hand gesture to cause a song to be skipped by a song-providing application programming interface (API) providing playback at, for example, a home speaker.

A hand gesture, as described herein, can include an in-air gesture, a surface-contact gesture, and or other gestures that can be detected and determined based on movements of a single hand (e.g., a one-handed gesture performed with a user's hand that is detected by one or more sensors of a wearable device (e.g., electromyography (EMG) and/or inertial measurement units (IMUs) of a wrist-wearable device, and/or one or more sensors included in a smart textile wearable device) and/or detected via image data captured by an imaging device of a wearable device (e.g., a camera of a head-wearable device, an external tracking camera setup in the surrounding environment)). "In-air" generally includes gestures in which the user's hand does not contact a surface, object, or portion of an electronic device (e.g., a head-wearable device or other communicatively coupled device, such as the wrist-wearable device), in other words the gesture is performed in open air in 3D space and without contacting a surface, an object, or an electronic device. Surface-contact gestures (contacts at a surface, object, body part of the user, or electronic device) more generally are also contemplated in which a contact (or an intention to contact) is detected at a surface (e.g., a single- or double-finger tap on a table, on a user's hand or another finger, on the user's leg, a couch, a steering wheel). The different hand gestures disclosed herein can be detected using image data and/or sensor data (e.g., neuromuscular signals sensed by one or more biopotential sensors (e.g., EMG sensors) or other types of data from other sensors, such as proximity sensors, ToF sensors, sensors of an IMU, capacitive sensors, strain sensors) detected by a wearable device worn by the user and/or other electronic devices in the user's possession (e.g., smartphones, laptops, imaging devices, intermediary devices, and/or other devices described herein).

The input modalities as alluded to above can be varied and are dependent on a user's experience. For example, in an interaction in which a wrist-wearable device is used, a user can provide inputs using in-air or surface-contact gestures that are detected using neuromuscular signal sensors of the wrist-wearable device. In the event that a wrist-wearable device is not used, alternative and entirely interchangeable input modalities can be used instead, such as camera(s) located on the headset/glasses or elsewhere to detect in-air or surface-contact gestures or inputs at an intermediary processing device (e.g., through physical input components (e.g., buttons and trackpads)). These different input modalities can be interchanged based on both desired user experiences, portability, and/or a feature set of the product (e.g., a low-cost product may not include hand-tracking cameras).

While the inputs are varied, the resulting outputs stemming from the inputs are also varied. For example, an in-air gesture input detected by a camera of a head-wearable device can cause an output to occur at a head-wearable device or control another electronic device different from the head-wearable device. In another example, an input detected using data from a neuromuscular signal sensor can also cause an output to occur at a head-wearable device or control another electronic device different from the head-wearable device. While only a couple examples are described above, one skilled in the art would understand that different input modalities are interchangeable along with different output modalities in response to the inputs.

Specific operations described above may occur as a result of specific hardware. The devices described are not limiting and features on these devices can be removed or additional features can be added to these devices. The different devices can include one or more analogous hardware components. For brevity, analogous devices and components are described herein. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device, a head-wearable device, a handheld intermediary processing device (HIPD), a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., VR animations, such as three-dimensional modeling); (iv) a field-programmable gate array (FPGA) that can be programmed and reconfigured after manufacturing and/or customized to perform specific tasks, such as signal processing, cryptography, and machine learning; or (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or (v) any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) pogo pins, which may be small, spring-loaded pins configured to provide a charging interface; (v) wireless charging interfaces; (vi) global-positioning system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device, such as a simultaneous localization and mapping (SLAM) camera); (ii) biopotential-signal sensors; (iii) IMUs for detecting, for example, angular rate, force, magnetic field, and/or changes in acceleration; (iv) heart rate sensors for measuring a user's heart rate; (v) peripheral oxygen saturation (SpO₂) sensors for measuring blood oxygen saturation and/or other biometric data of a user; (vi) capacitive sensors for detecting changes in potential at a portion of a user's body (e.g., a sensor-skin interface) and/or the proximity of other devices or objects; (vii) sensors for detecting some inputs (e.g., capacitive and force sensors); and (viii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) EMG sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications; (x) camera applications; (xi) web-based applications; (xii) health applications; (xiii) AR and MR applications; and/or (xiv) any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). A communication interface can refer to a software layer that enables different software programs to communicate with each other (e.g., APIs and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted and/or modified).

### Techniques For Display Suppression Switching

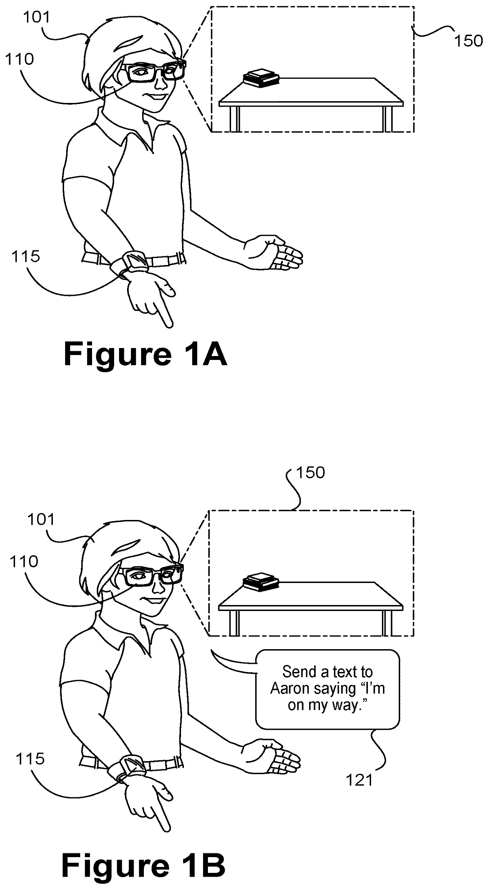

Figures 1A-1C illustrate an example of a user 101 interacting with a head-wearable device 110 in a displayless mode, in accordance with some embodiments. In some embodiments, the head-wearable device 110 is an extended-reality (XR) headset, smart contacts, and/or a pair of smart glasses including one or more displays (e.g., for visually presenting information to the user 101), one or more speakers (e.g., for audibly presenting information to the user 101), one or more eye-tracking devices (e.g., for detecting gaze gestures performed by the user 101), one or more forward-facing cameras (e.g., for capturing image data of a field-of-view of the user 101 and/or capturing one or more gestures performed by the user 101), and/or one or more microphones (e.g., for detecting voice commands performed by the user 101). In some embodiments, the head-wearable device 110 is communicatively coupled to a wrist-wearable device 115, and the wrist-wearable device 115 includes one or more displays, one or more speakers, one or more microphones, and/or one or more biopotential sensors (e.g., an inertial measurement unit (IMU) sensor and/or an electromyography (EMG) sensor) (e.g., for detecting hand/arm/wrist gestures performed by the user 101). In some embodiments, the head-wearable device 110 is communicatively coupled to one or more other devices (including the wrist-wearable device 115). The one or more other devices include a smartphone, a computer, a handheld intermediary processing device, and/or another processing device. The head-wearable device 110 may be switched between a display mode and a displayless mode. While in the display mode, the head-wearable device 110 presents one or more user interfaces (e.g., user interfaces associated with an application), one or more responses (e.g., a response to a user input), one or more notifications, and/or other information to the user 101. In some embodiments, the one or more responses, the one or more notifications, and/or the other information are generated by an artificially intelligent (AI) assistant executed at the head-wearable device 110 and/or the one or more other devices. While in the displayless mode, the head-wearable device 110 presents the one or more responses, the one or more notifications, and/or the other information.

Figure 1A illustrates the user 101 wearing the head-wearable device 110 in the displayless mode, in accordance with some embodiments. While in the displayless mode, the one or more displays of the head-wearable device 110 are off, and the head-wearable device 110 does not present any XR elements in a user's view 150. Figure 1B illustrates the user 101 performing a first voice command 121 (e.g., "Send a text to Aaron saying 'I'm on my way‴). In accordance with a determination that the user 101 has performed the first voice command 121, the head-wearable device 110 causes one or more first tasks (e.g., sending a text to another user) to be performed based on the first voice command 121. In some embodiments, the one or more first tasks are determined, based on the first voice command 121, by the AI assistant. In some embodiments, the head-wearable device 110 executes the one or more first tasks, and/or the head-wearable device 110 sends a first instruction to one or more other devices (e.g., the wrist-wearable device 115) to perform the one or more first tasks. In response to receiving the first instruction, the head-wearable device and/or the one or more devices performs the one or more tasks.

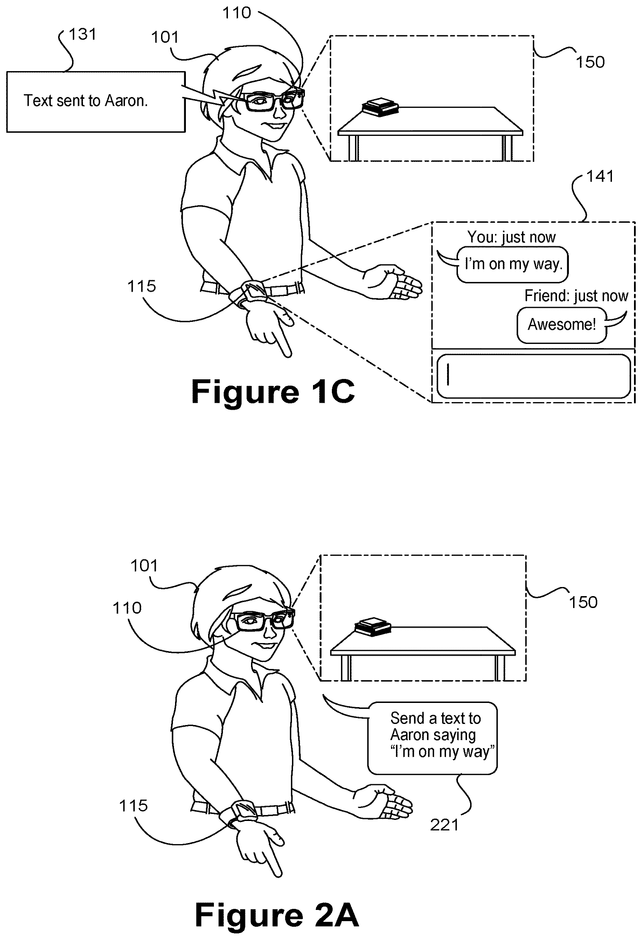

Figure 1C illustrates the wrist-wearable device 115 displaying a first updated user interface (UI) in response to the head-wearable device 110 and/or the one or more other devices completing the one or more first tasks, in accordance with some embodiments. In response to the head-wearable device 110 and/or the one or more other devices completing the one or more first tasks, the head-wearable device 110 presents a first audio response 131 (e.g., "text sent to Aaron") at the one or more speakers of the head-wearable device 110 (and/or one or more other speakers communicatively coupled to the head-wearable device 110), and/or the one or more other devices presents a first visual response 141 (e.g., displaying the first updated UI associated with the one or more first tasks and/or presenting a first notification) at the one or more displays of the one or more other devices. As a first example, Figure 1C illustrates the head-wearable device 110 presenting the first audio response 131 and displaying the first updated UI associated with the one or more first tasks (e.g., a messaging UI with a text sent to the other user) in response to the user 101 performing the first voice command 121.

Figures 2A-2C illustrate the head-wearable device 110 switching from the displayless mode to the display mode to confirm a user command, in accordance with some embodiments. In some embodiments, an initial user command will require a confirmation from the user 101 before the head-wearable device 110 and/or the one or more other devices can perform tasks associated with the initial user command. In accordance with some embodiments, it may be quicker, more discrete, and/or easier for the user 101 to see a confirmation request at the one or more displays of the head-wearable device 110 rather than have the confirmation request read out at the one or more speakers of the head-wearable device 110 (and/or one or more other speakers communicatively coupled to the head-wearable device 110). Thus, the head-wearable device 110 will automatically switch from the displayless mode to the display mode to present the confirmation request.

Figure 2A illustrates the user 101 performing a second voice command 221 (e.g., "Send a text to Aaron saying 'I'm on my way‴) while the head-wearable device 110 is in the displayless mode, in accordance with some embodiments. In accordance with a determination that the user 101 has performed the second voice command 221, the head-wearable device 110 and/or the one or more other devices determines one or more second tasks (e.g., sending a text to the other user) to be performed based on the second voice command 221. In accordance with the determination that the user 101 has performed the second voice command 221, the head-wearable device 110 and/or the one or more other devices determines whether a user confirmation is required to complete the one or more second tasks. In some embodiments, the determination of whether the user confirmation is required to complete the one or more second tasks is based on a task type of the one or more second tasks (e.g., a confirmation-needed task type includes sending messages, presenting personal information, and/or changing device settings, a confirmation-not-needed task type includes taking pictures, playing music, and/or performing web searches) and/or a user setting/preference. In some embodiments, the AI assistant determines whether the user confirmation is required to complete the one or more second tasks.

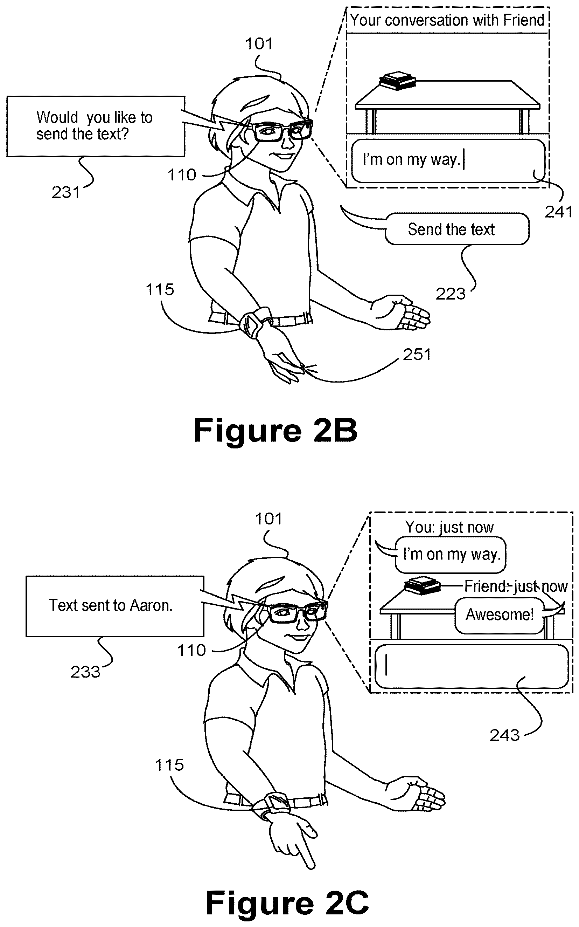

Figure 2B illustrates the head-wearable device 110 switching from the displayess mode to the display mode, in accordance with some embodiments. In accordance with a determination that the user confirmation is required to complete the one or more second tasks, the head-wearable device 110 switches from the displayless mode to the display mode, and the head-wearable device 110 presents a confirmation request to the user 101. The head-wearable device 110 presents the confirmation request as a visual confirmation request 241 (e.g., displaying a messaging UI with a draft message) at the one or more displays of the head-wearable device 110 and/or as an audio confirmation request 231 (e.g., "Would you like to send the text?") at the one or more speakers of the head-wearable device 110 (and/or one or more other speakers communicatively coupled to the head-wearable device 110). In some embodiments, the confirmation request is based on the second voice command 221, and/or the confirmation request is generated by the AI assistant. The user 101 performs a confirmation command to cause the head-wearable device 110 and/or the one or more other devices to performs the one or more second tasks. The confirmation command is a confirmation voice command 223 (e.g., "Send the text."), a confirmation hand gesture 251 (e.g., a double-index finger-pinch gesture), a confirmation gaze gesture (e.g., the user 101 looks at a send message UI element of the messaging UI), and/or a combination thereof (e.g., the user 101 looks at the send message UI element of the messaging UI and performs a select hand gesture (e.g., a single-index finger-pinch gesture)).

Figure 2C illustrates the head-wearable device 110 after completing the one or more second tasks, in accordance with some embodiments. In response to the user 101 performing the confirmation command, the head-wearable device 110 and/or the one or more other devices perform the one or more second tasks. In response to the head-wearable device 110 and/or the one or more other devices completing the one or more second tasks, the head-wearable device 110 presents a second audio response 233 (e.g., "Text sent to Aaron") at the one or more speakers of the head-wearable device 110 (and/or one or more other speakers communicatively coupled to the head-wearable device 110), and/or the head-wearable device 110 presents a second visual response 243 (e.g., the messaging UI with a text sent to the other user) at the one or more displays of the head-wearable device 110. Additionally, in response to the head-wearable device 110 and/or the one or more other devices completing the one or more second tasks, the head-wearable device 110 switches from the display mode to the displayless mode and/or the head-wearable device 110 remains in the display mode until the user 101 performs a switch input (e.g., a switch voice command, such as "Display off," and/or a switch gesture, such as a wrist-roll gesture).

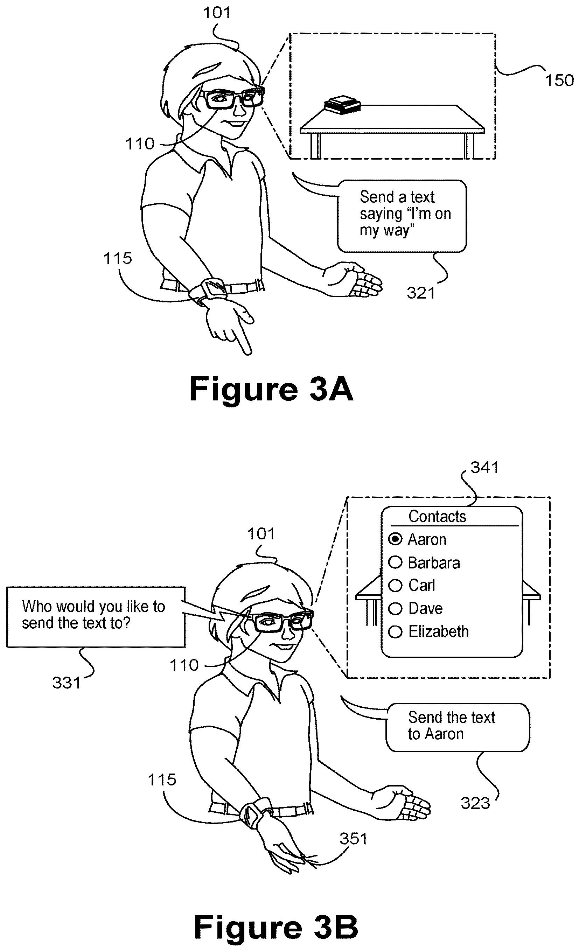

Figures 3A-3C illustrate the head-wearable device 110 switching from the displayless mode to the display more to disambiguate a user command, in accordance with some embodiments. In some embodiments, another initial user command will require a disambiguation from the user 101 before the head-wearable device 110 and/or the one or more other devices can perform tasks associated with the other initial user command. In accordance with some embodiments, it may be quicker, more discrete, and/or easier for the user 101 to see a disambiguation request at the one or more displays of the head-wearable device 110 rather than have the disambiguation request read out at the one or more speakers of the head-wearable device 110 (and/or one or more other speakers communicatively coupled to the head-wearable device 110). Thus, the head-wearable device 110 will automatically switch from the displayless mode to the display mode to present the disambiguation request.

Figure 3A illustrates the user 101 performing a third voice command 321 (e.g., "Send a text saying 'I'm on my way‴) while the head-wearable device 110 is in the displayless mode, in accordance with some embodiments. In accordance with a determination that the user 101 has performed the third voice command 321, the head-wearable device 110 and/or the one or more other devices determines one or more third tasks (e.g., sending a text to another user) to be performed based on the third voice command 321. In accordance with a determination that the third voice command 321 lacks sufficient information and/or lacks sufficient context to complete the one or more third tasks and/or determine the one or more third tasks (e.g., a recipient of the text cannot be determined based on the third voice command 321), the head-wearable device 110 and/or the one or more other devices generates a disambiguation prompt to present to the user 101. In some embodiments, the AI assistant determines that the third voice command 321 includes insufficient information and/or context to complete the one or more third tasks and/or determine the one or more third tasks, and/or the AI assistant generates the disambiguation prompt.

Figure 3B illustrates the head-wearable device 110 switching from the displayless mode to the display mode, in accordance with some embodiments. In accordance with the determination that the third voice command 321 includes insufficient information and/or context to complete the one or more third tasks and/or determine the one or more third tasks, the head-wearable device 110 switches from the displayless mode to the display mode, and the head-wearable device 110 presents the disambiguation prompt to the user 101. The head-wearable device 110 presents the disambiguation prompt as a visual disambiguation prompt 341 (e.g., displaying a contact list) at the one or more displays of the head-wearable device 110 and/or as an audio disambiguation prompt 331 (e.g., "Who would you like to send the text to?") at the one or more speakers of the head-wearable device 110 (and/or one or more other speakers communicatively coupled to the head-wearable device 110). The user 101 performs a disambiguation command to cause the head-wearable device 110 and/or the one or more other devices to performs the one or more third tasks. The disambiguation command is a disambiguation voice command 323 (e.g., "Send the text to Aaron."), a disambiguation hand gesture 351 (e.g., a scroll hand gesture (e.g., a thumb-slide gesture) and/or a select hand gesture (e.g., a single-index finger-pinch gesture)), a disambiguation gaze gesture (e.g., the user 101 looks at a contact UI element, associated with the other user, of the messaging UI), and/or a combination thereof (e.g., the user 101 looks at the contact UI element of the messaging UI and performs a select hand gesture (e.g., a single-index finger-pinch gesture)).

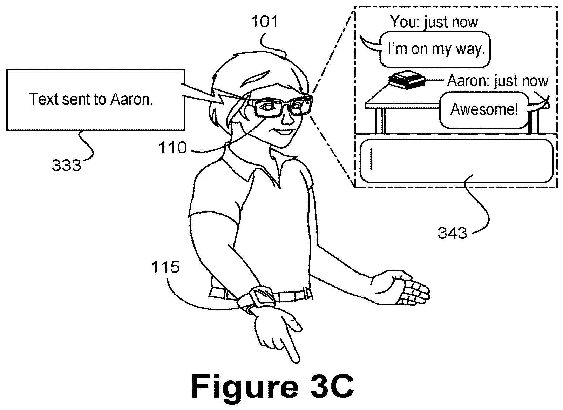

Figure 3C illustrates the head-wearable device 110 after completing the one or more third tasks, in accordance with some embodiments. In response to the user 101 performing the disambiguation command, the head-wearable device 110 and/or the one or more other devices perform the one or more third tasks. In response to the head-wearable device 110 and/or the one or more other devices completing the one or more third tasks, the head-wearable device 110 presents a third audio response 333 (e.g., "Text sent to Aaron") at the one or more speakers of the head-wearable device 110 (and/or one or more other speakers communicatively coupled to the head-wearable device 110), and/or the head-wearable device 110 presents a third visual response 343 (e.g., the messaging UI with a text sent to the other user) at the one or more displays of the head-wearable device 110. Additionally, in response to the head-wearable device 110 and/or the one or more other devices completing the one or more third tasks, the head-wearable device 110 switches from the display mode to the displayless mode and/or the head-wearable device 110 remains in the display mode until the user 101 performs the switch input.

In some embodiments, while the head-wearable device 110 is in the display mode, the user 101 performs an additional voice command (e.g., "Send a text to Barbara saying 'Just sent a message to Aaron‴). In accordance with a determination that the user 101 has performed the additional voice command, the head-wearable device 110 and/or the one or more other devices determines one or more additional tasks (e.g., sending a text to an additional user) to be performed based on the additional voice command. In some embodiments, in accordance with a determination that an additional user confirmation is not required to complete the one or more additional tasks and a determination that the additional voice command includes sufficient information and includes sufficient context to complete the one or more additional tasks and/or determine the one or more additional tasks, the head-wearable device 110 and/or the one or more other devices performs the one or more additional tasks. In some embodiments, in accordance with a determination that the additional user confirmation is required to complete the one or more additional tasks, present an additional confirmation request to the user 101. In response to the user 101 performing an additional confirmation command, the head-wearable device 110 and/or the one or more other devices performs the one or more additional tasks. In some embodiments, in accordance with a determination that the additional voice command lacks sufficient information and/or lacks sufficient context to complete the one or more additional tasks and/or determine the one or more additional tasks, present an additional disambiguation prompt to the user 101. In response to the user 101 performing an additional disambiguation command, the head-wearable device 110 and/or the one or more other devices performs the one or more additional tasks.

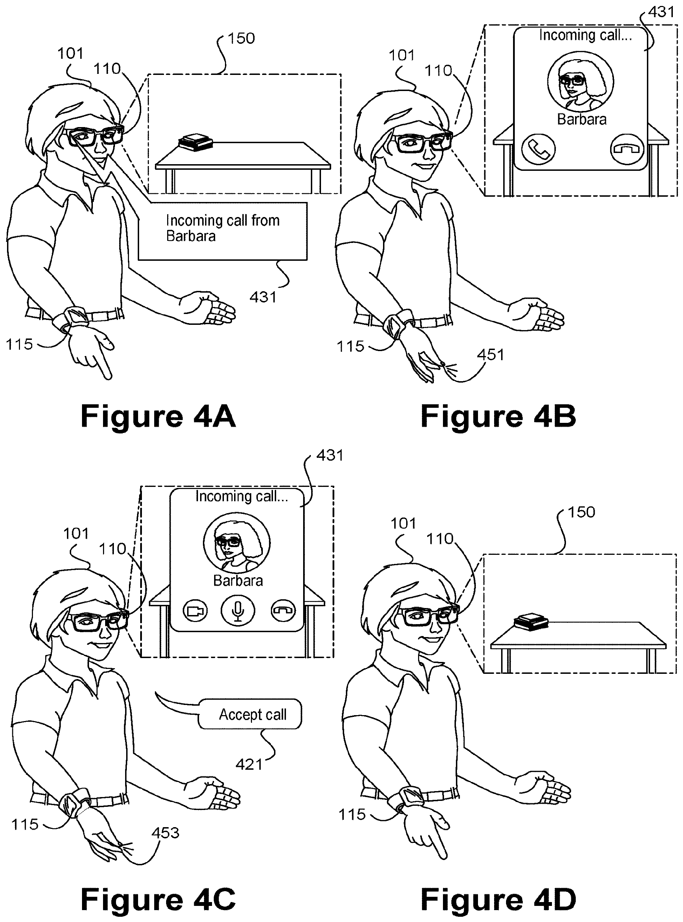

Figures 4A-4D illustrate the head-wearable device 110 switching to the display mode in response to a wake command and automatically switching back to the displayless mode, in accordance with some embodiments. In some embodiments, a user may choose to interact with an ongoing task (e.g., an incoming call) visually, at the one or more displays of the head-wearable device 110, rather than interact with the ongoing task audially, at the one or more speakers of the head-wearable device 110 (and/or one or more other speakers communicatively coupled to the head-wearable device 110). Thus, the head-wearable device 110 will automatically display an interface associated with the ongoing task in response to a user command to switch the head-wearable device from the displayless mode to the display mode.

Figure 4A illustrates the head-wearable device 110 and/or the one or more other devices performing one or more fourth tasks (e.g., receiving and facilitating a call with another user) while the head-wearable device 110 is in the displayless mode, in accordance with some embodiments. In some embodiments, the one or more fourth tasks are performed by the head-wearable device 110 and/or the one or more other devices in response to a fourth instruction (e.g., an incoming call request received at the head-wearable device 110 and/or the one or more other devices). The head-wearable device 110 presents a fourth audio notification 431 (e.g., "Incoming call from Barbara.") at the one or more speakers of the head-wearable device 110 (and/or one or more other speakers communicatively coupled to the head-wearable device 110) based on the one or more fourth tasks.

Figure 4B illustrates the head-wearable device 110 switching from the displayless mode to the display mode in response to a wake command 451, in accordance with some embodiments. In some embodiments, the wake command 451 is a wake hand gesture (e.g., a double-middle finger-pinch gesture), as illustrated in Figure 4B, and/or a wake voice command (e.g., "Wake screen."). In accordance with a determination that the user 101 performs the wake command 451, the head-wearable device 110 switches from the displayless mode to the display mode, and the head-wearable device 110 presents a fourth UI 431 (e.g., an incoming call UI, as illustrated in Figure 4B) based on the one or more fourth tasks. In some embodiments, the fourth UI 431 is displayed based, at least in-part, on a determination (e.g., by the AI assistant) that the head-wearable device 110 and/or the one or more other devices is currently performing the one or more fourth tasks (e.g., since the head-wearable device 110 and/or the one or more other devices is currently receiving the call with the other user, the incoming call UI is displayed in response to the wake command 451) and one or more other contextual elements.

Figure 4C illustrates the user 101 interacting with the fourth UI 431 at the head-wearable device, in accordance with some embodiments. The user 101 interacts with the fourth UI 431 (e.g., accepting the call, modifying a volume of the call, hanging-up the call, etc.) by performing one or more voice commands (e.g., fourth voice command 421), one or more hand gestures (e.g., a volume increase hand gesture 453 (e.g., an index finger-pinch-and-hold gesture)), one or more gaze gestures, and/or one or more combinations thereof. Figure 4D illustrates the head-wearable device 110 automatically switching from the display mode to the displayless mode, in accordance with some embodiments. In accordance with a determination that the head-wearable device 110 and/or the one or more other devices have completed and/or stopped performing the one or more fourth tasks (e.g., the user and/or the other has hung-up the call), the head-wearable device 110 automatically switches from the display mode to the displayless mode.

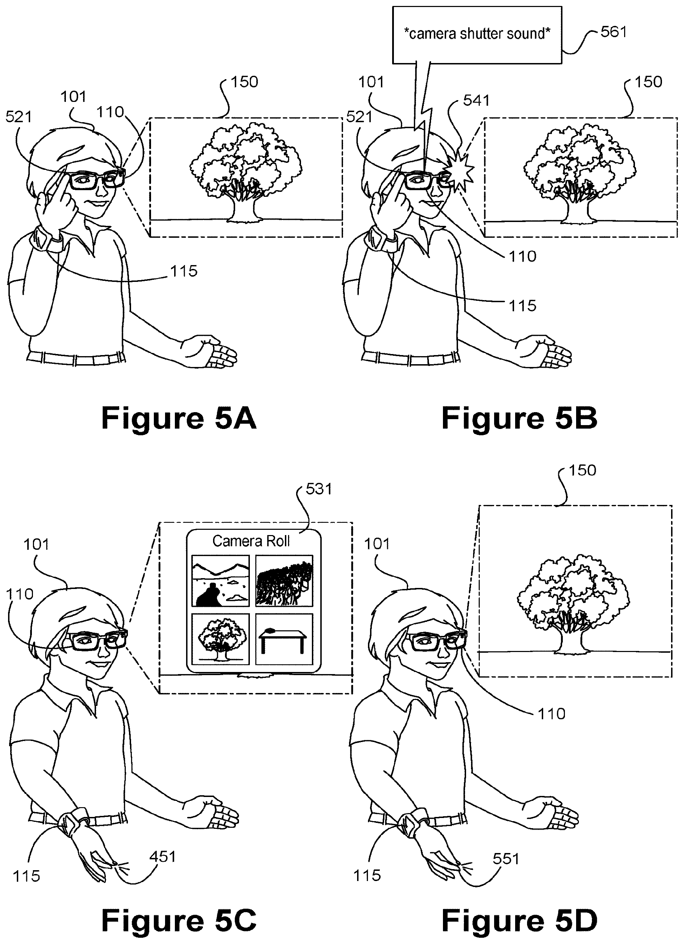

Figures 5A-5D illustrate the head-wearable device 110 switching to the display mode in response to a wake command and switching back to the displayless mode in response to a sleep command, in accordance with some embodiments. In some embodiments, a user may desire to interact with a recently-performed task (e.g., a captured photo) visually, at the one or more displays of the head-wearable device 110. Thus, the head-wearable device 110 will automatically display an interface associated with the recently-performed task in response to a user command to switch the head-wearable device from the displayless mode to the display mode. In some embodiments, the AI assistant determines the recently-performed task of a plurality of recently-performed tasks based on one or more contextual elements.

Figure 5A illustrates the head-wearable device 110 and/or the one or more other devices performing one or more fifth tasks (e.g., taking a photograph at one or more cameras of the head-wearable device 110) while the head-wearable device 110 is in the displayless mode, in accordance with some embodiments. In some embodiments, the one or more fifth tasks are performed by the head-wearable device 110 and/or the one or more other devices in response to a fifth instruction (e.g., the user 101 performs a photo command (e.g., a photo tap gesture 521, such as tapping a portion of the head-wearable device 110, and/or a photo voice command, such as "Take photo.") at the head-wearable device 110, as illustrated in Figures 5A-5B).

Figure 5B illustrates the head-wearable device 110 presenting a fifth notification based on the one or more fifth tasks, in accordance with some embodiments. In some embodiments, the fifth notification is a fifth audio notification 561 (e.g., a camera shutter sound) at the one or more speakers of the head-wearable device 110 (and/or one or more other speakers communicatively coupled to the head-wearable device 110), and/or a fifth visual notification 541 (e.g., a light flash) at a light (e.g., a forward-facing LED) of the head-wearable device 110. In some embodiments, the fifth notification indicates to the user 101 that the head-wearable device 110 and/or the one or more other devices is currently performing the one or more fifth tasks (e.g., the fifth notification indicates to the user 101 that the head-wearable device 110 is taking a photograph).

Figure 5C illustrates the head-wearable device 110 switching from the displayless mode to the display mode in response to the wake command 451, in accordance with some embodiments. In accordance with a determination that the user 101 performs the wake command 451, the head-wearable device 110 switches from the displayless mode to the display mode, and the head-wearable device 110 presents a fifth UI 531 (e.g., a camera roll UI, as illustrated in Figure 5C) based on the one or more fifth tasks. In some embodiments, the fifth UI 531 is displayed based, at least in-part, on a determination (e.g., by the AI assistant) that the head-wearable device 110 and/or the one or more other devices has recently (e.g., a predetermined time period (e.g., between three and five seconds) before the user 101 performs the wake command 451) performed the one or more fifth tasks (e.g., since the head-wearable device 110 has recently taken pictures, the camera roll UI is displayed in response to the wake command 451) and one or more other contextual elements. In some embodiments, in accordance with a determination that the head-wearable device 110 and/or the one or more other devices has not recently (e.g., not within the predetermined time period of the user 101 performing the wake command 451), the head-wearable device 110 displays a generic UI (e.g., a home screen UI, a menu UI, etc.) rather than the fifth UI.

Figure 5D illustrates the head-wearable device 110 switching from the display mode to the displayless mode in response to the user 101 performing a sleep command 551, in accordance with some embodiments. In some embodiments, the sleep command 551 is a sleep hand gesture (e.g., a double-ring finger pinch gesture), as illustrated in Figure 5D, and/or a sleep voice command (e.g., "Display off"). In accordance with a determination that the user 101 performs the sleep command 551, the head-wearable device 110 switches from the display mode to the displayless mode, and the head-wearable device 110 ceases presenting the fifth UI 531.

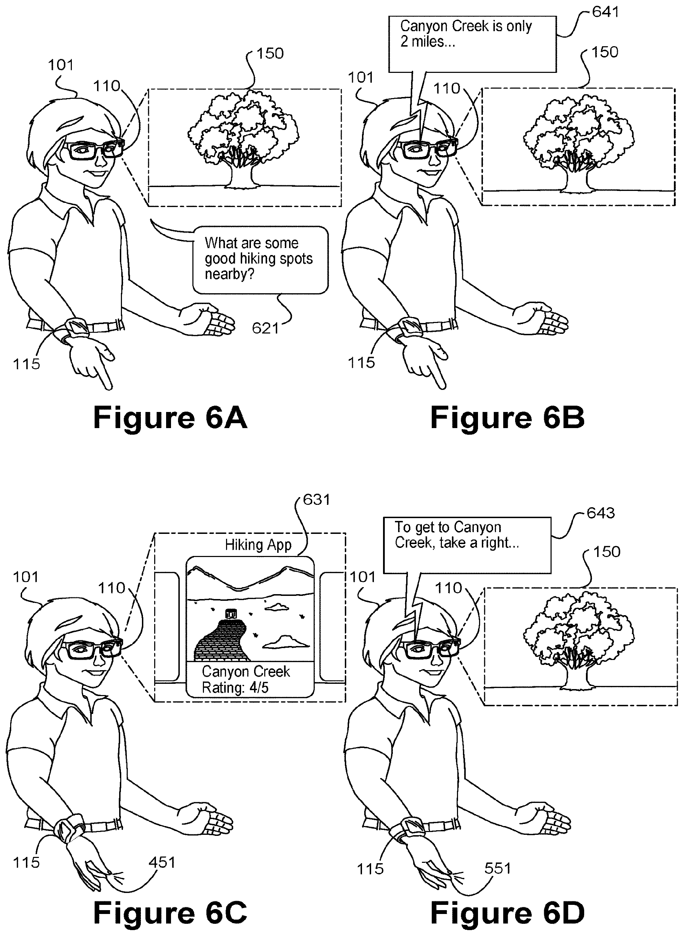

Figures 6A-6D illustrate an example of the head-wearable device 110 switching to the display mode in response to a wake command and switching back to the displayless mode in response to a sleep command, in accordance with some embodiments. In some embodiments, a user may choose to interact with an ongoing task (e.g., an incoming call) visually, rather than interact with the ongoing task audially, only to choose to return to the audial interaction. Thus, the head-wearable device 110 will automatically display an interface associated with the ongoing task in response to a user command to switch the head-wearable device from the displayless mode to the display mode, and the head-wearable device 110 will automatically return to presenting an audio response associated with the ongoing task in response to another user command to switch the head-wearable device from the display mode to the displayless mode.

Figure 6A illustrates the user 101 providing a sixth instruction (e.g., a sixth voice command 621 "What are some good hiking spots nearby?") to the head-wearable device 110, while the head-wearable device is in the displayless mode. In accordance with a determination that the user 101 has provided the sixth instruction, the head-wearable device 110 causes one or more sixth tasks (e.g., performing a query (e.g., performed by the AI assistant) to find one or more nearby hiking options and providing results of the query to the user 101) to be performed based on the sixth instruction. In some embodiments, the one or more sixth tasks are determined, based on the sixth instruction, by the AI assistant.

Figure 6B illustrates the head-wearable device 110 presenting a sixth response based on the one or more sixth tasks, in accordance with some embodiments. In some embodiments, the sixth response is a sixth audio response 641 (e.g., a reading of the results of the query "Canyon Creek is only 2 miles...") at the one or more speakers of the head-wearable device 110 (and/or one or more other speakers communicatively coupled to the head-wearable device 110), and/or at the one or more displays of the one or more other devices. In some embodiments, the sixth notification is based on the on the one or more sixth tasks and one or more other contextual elements. In some embodiments, the sixth notification indicates to the user 101 that the head-wearable device 110 and/or the one or more other devices has completed performing the one or more sixth tasks (e.g., as illustrated in Figure 6B) and/or is currently performing the one or more sixth tasks.

Figure 6C illustrates the user 101 performing the wake command 451 to cause the head-wearable device to switch from the displayless mode to the display mode while the head-wearable device 110 is performing the one or more sixth tasks, in accordance with some embodiments. In accordance with a determination that the user 101 performs the wake command 451, the head-wearable device 110 switches from the displayless mode to the display mode, and the head-wearable device 110 presents a sixth UI 631 (e.g., a UI associated with the results of the query, such as a hiking application UI, as illustrated in Figure 6C) based on the one or more sixth tasks. Additionally, in accordance with the determination that the user 101 performs the wake command 451, the head-wearable device 110 ceases presenting a sixth audio response 641.

Figure 6D illustrates the head-wearable device 110 switching from the display mode to the displayless mode in response to the user 101 performing the sleep command 551, in accordance with some embodiments. In some embodiments, the head-wearable device 110 and/or the one or more other devices continue performing the one or more sixth tasks after the head-wearable device 110 switches from the display mode to the displayless mode (e.g., head-wearable device 110 continues to present information from the hiking application at the speaker of the head-wearable device 110). In some embodiments, the head-wearable device 110 presents a continued audio response 643 (e.g., "To get to Canyon Creek, take a right...") associated with the one or more sixth tasks after the head-wearable device 110 reenters the displayless mode.

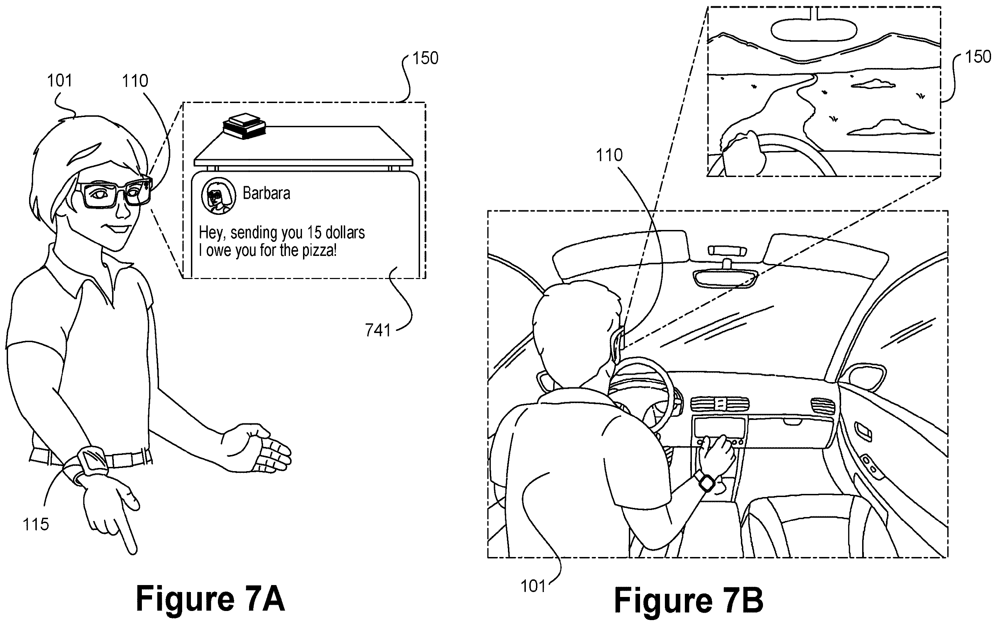

Figures 7A-7D illustrate the head-wearable device 110 automatically switching from the display mode to the displayless mode based on a determination that a display suppression condition is present, in accordance with some embodiments. In some embodiments, the display suppression condition is a safety display suppression condition (e.g., the user 101 is driving a car, the user 101 is riding a bicycle, the user 101 is walking toward a wall, etc.), an attention display suppression condition (e.g., the user 101 is in a movie theater, the user 101 is having a conversation with another person, the user 101 is looking at a display of another device), and/or a user-determined display suppression condition (e.g., the user 101 may select a custom display suppression condition, such as when the user 101 enters a geographic area (e.g., a school building, an office building, a church, etc.), when a battery of the head-wearable device 110 falls below a battery threshold (e.g., ten percent), certain time periods during a day, etc.).

Figure 7A illustrates the user 101 interacting with the head-wearable device 110 while the head-wearable device 110 is in the display mode, in accordance with some embodiments. In response to receiving a seventh instruction (e.g., an incoming message) at the head-wearable device 110 and/or the one or more other devices, the head-wearable device 110 and/or the one or more other devices perform one or more seventh tasks (e.g., receiving the incoming message and presenting the incoming message to the user 101). The head-wearable device 110 presents a seventh visual notification 741, based on the one or more seventh tasks, at the one or more displays of the head-wearable device 110. In some embodiments, the head-wearable device 110 additionally presents a seventh audio notification, based on the one or more seventh tasks, at the one or more speakers of the head-wearable device 110 (and/or one or more other speakers communicatively coupled to the head-wearable device 110).

Figure 7B illustrates the head-wearable device 110 automatically switching from the display mode to the displayless mode based on a determination that a first display suppression condition is present, in accordance with some embodiments. In accordance with the determination that the first display suppression condition is present (e.g., the user 101 is in a driver's seat of a car), the head-wearable device 110 automatically switches from the display mode to the displayless mode and ceases presenting the seventh visual notification 741. In some embodiments, the determination that the first display suppression condition is present is made when the user 101 begins performing an action associated with the first display suppression condition (e.g., the user 101 starts driving the car), at a predetermined interval (e.g., a determination of whether the first display suppression condition is present is made every ten seconds, one minute, five minutes, etc.), and/or when an instruction (e.g., the incoming message) is received at the head-wearable device 110. In some embodiments, the head-wearable device 110 and/or the one or more other devices is still performing the one or more seventh tasks when the head-wearable device 110 automatically switches from the display mode to the displayless mode. Thus, the head-wearable device 110 presents the seventh audio notification, based on the one or more seventh tasks, at the one or more speakers of the head-wearable device 110 (and/or one or more other speakers communicatively coupled to the head-wearable device 110 (e.g., one or more speakers of the car)).

In some embodiments, the determination that the first display suppression condition is present is a determination the user 101 is driving a car, as illustrated in Figure 7B. In some embodiments, the determination that the first display suppression condition is present includes a determination that the user 101 is in a driver's seat of the car and not a passenger seat of the car. For example, the one or more forward-facing cameras of the head-wearable device 110 capture image data of a field-of-view of the user 101, and, based on the image data, determines whether the user 101 is sitting in the driver's seat and/or a passenger seat of the car (e.g., by determining whether a steering wheel is in the field-of-view). In some embodiments, the determination that the first display suppression condition is present is based on one or more of image data captured at the one or more forward-facing cameras of the head-wearable device 110, audio data captured at the one or more microphones of the head-wearable device 110, location data of the user 101 from a global positioning system (GPS) communicatively to the head-wearable device 110, inertial measurement unit (IMU) data from an IMU sensor communicatively coupled to the head-wearable device 110, and/or biopotenial data from a biopotential sensor (e.g., an electromyography (EMG) sensor) communicatively coupled to the head-wearable device 110.

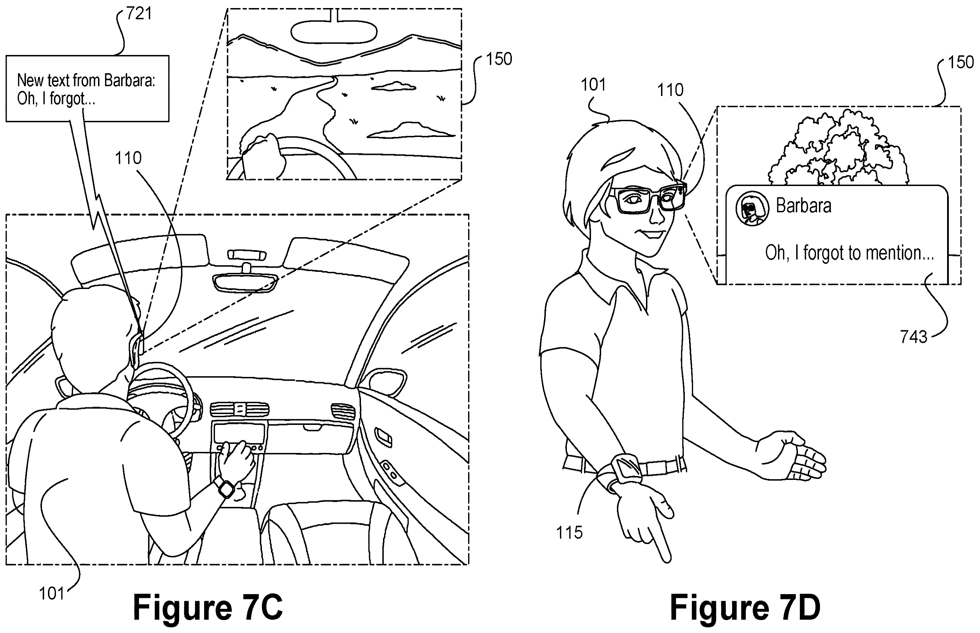

Figure 7C illustrates the user 101 interacting with the head-wearable device 110 while the head-wearable device 110 is in the displayless mode, in accordance with some embodiments. In response to receiving an additional instruction (e.g., an additional incoming message) at the head-wearable device 110 and/or the one or more other devices, the head-wearable device 110 and/or the one or more other devices perform one or more additional tasks (e.g., receiving the additional incoming message and presenting the additional incoming message to the user 101). The head-wearable device 110 presents an additional audio notification 721, based on the one or more additional tasks, at the one or more speakers of the head-wearable device 110 (and/or one or more other speakers communicatively coupled to the head-wearable device 110 (e.g., one or more speakers of the car)).

Figure 7D illustrates the head-wearable device 110 automatically switching from the displayless mode to the display mode based on a determination that the first display suppression condition is no longer present, in accordance with some embodiments. In accordance with the determination that the first display suppression condition is no longer present (e.g., the user 101 has left the car), the head-wearable device 110 automatically switches from the displayless mode to the display mode. In some embodiments, the determination that the first display suppression condition is no longer present is made when the user 101 ceases performing the action associated with the first display suppression condition (e.g., the user 101 gets out of the car), at the predetermined interval, and/or when another instruction (e.g., the additional incoming message) is received at the head-wearable device 110. In some embodiments, in accordance with the determination that the first display suppression condition is no longer present, the head-wearable device 110 additionally presents an additional visual notification 743, based on the one or more additional tasks, at the one or more displays of the head-wearable device 110.

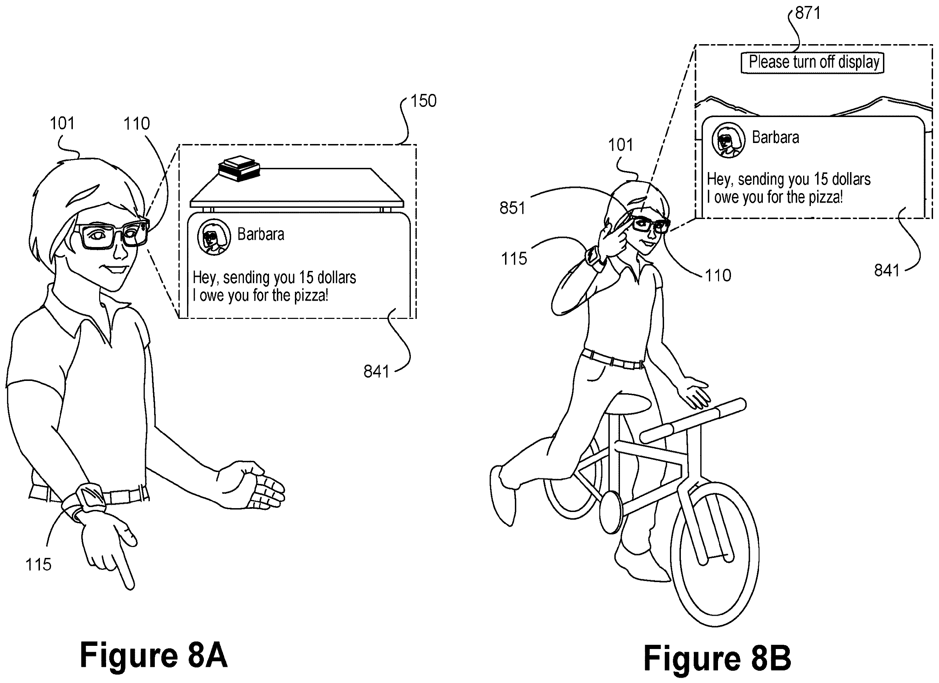

Figures 8A-8D illustrate the head-wearable device 110 prompting the user 101 to switch the head-wearable device 110 from the display mode to the displayless mode based on a determination that another display suppression condition is present, in accordance with some embodiments. In some embodiments, the other display suppression condition is a safety display suppression condition, an attention display suppression condition, and/or a user-determined display suppression condition.

Figure 8A illustrates the user 101 interacting with the head-wearable device 110 while the head-wearable device 110 is in the display mode, in accordance with some embodiments. In response to receiving an eighth instruction (e.g., a second incoming message) at the head-wearable device 110 and/or the one or more other devices, the head-wearable device 110 and/or the one or more other devices perform one or more eighth tasks (e.g., receiving the second incoming message and presenting the second incoming message to the user 101). The head-wearable device 110 presents an eighth visual notification 841, based on the one or more eighth tasks, at the one or more displays of the head-wearable device 110. In some embodiments, the head-wearable device 110 additionally presents an eighth audio notification, based on the one or more eighth tasks, at the one or more speakers of the head-wearable device 110(and/or one or more other speakers communicatively coupled to the head-wearable device 110).

Figure 8B illustrates the head-wearable device 110 presenting a prompt, to the user 101, to switch the head-wearable device 110 from the display mode to the displayless mode based on a determination that a second display suppression condition is present, in accordance with some embodiments. In accordance with the determination that the second display suppression condition is present (e.g., the user 101 is in on bicycle), the head-wearable device 110 presents a switch-off prompt 871 (e.g., "Please turn off the display."), which requests that the user 101 manually switch the head-wearable device 110 to the displayless mode. In some embodiments, the determination that the second display suppression condition is present is made when the user 101 begins performing an action associated with the second display suppression condition (e.g., the user 101 starts riding the bicycle), at another predetermined interval (e.g., a determination of whether the second display suppression condition is present is made every ten seconds, one minute, five minutes, etc.), and/or when another instruction (e.g., the second incoming message) is received at the head-wearable device 110. Figure 8B further illustrates the user 101, in response to the switch-off prompt 871, performing another sleep command 851 (e.g., tapping a portion of the head-wearable device 110, a double-ring finger pinch gesture, and/or a sleep voice command). In response to the other sleep command 851, the head-wearable device 110 switches from the display mode to the displayless mode and ceases presenting the eighth visual notification 841.

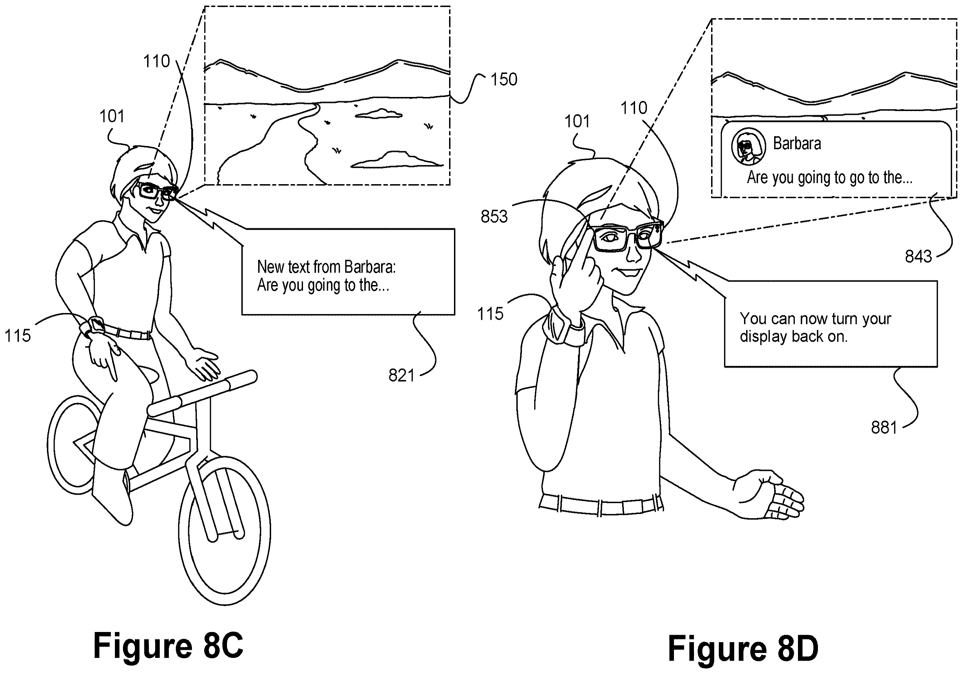

Figure 8C illustrates the user 101 interacting with the head-wearable device 110 while the head-wearable device 110 is in the displayless mode, in accordance with some embodiments. In response to receiving another instruction (e.g., another incoming message) at the head-wearable device 110 and/or the one or more other devices, the head-wearable device 110 and/or the one or more other devices perform one or more other tasks (e.g., receiving the other incoming message and presenting the other incoming message to the user 101). The head-wearable device 110 presents another audio notification 821, based on the one or more other tasks, at the one or more speakers of the head-wearable device 110 (and/or one or more other speakers communicatively coupled to the head-wearable device 110).

Figure 8D illustrates the head-wearable device 110 presenting a prompt, to the user 101, to switch the head-wearable device 110 from the displayless mode to the display mode based on a determination that the second display suppression condition is no longer present, in accordance with some embodiments. In accordance with the determination that the second display suppression condition is no longer present (e.g., the user 101 has gotten off the bicycle), the head-wearable device 110 presents a switch-on prompt 881, which requests that the user 101 manually switch the head-wearable device 110 to the display mode. In some embodiments, the determination that the second display suppression condition is no longer present is made when the user 101 ceases performing the action associated with the second display suppression condition (e.g., the user 101 stops riding the bicycle), at the other predetermined interval, and/or when another instruction (e.g., the other incoming message) is received at the head-wearable device 110. Figure 8D further illustrates the user 101, in response to the switch-on prompt 881 (e.g., "You can now turn your display back on."), performing another wake command 853 (e.g., tapping the portion of the head-wearable device 110, a double-middle finger pinch gesture, and/or a wake voice command). In response to the other wake command 853, the head-wearable device 110 switches from the displayless mode to the display mode. In some embodiments, in response to the other wake command 853, the head-wearable device 110 additionally presents another visual notification 843, based on the one or more other tasks, at the one or more displays of the head-wearable device 110.

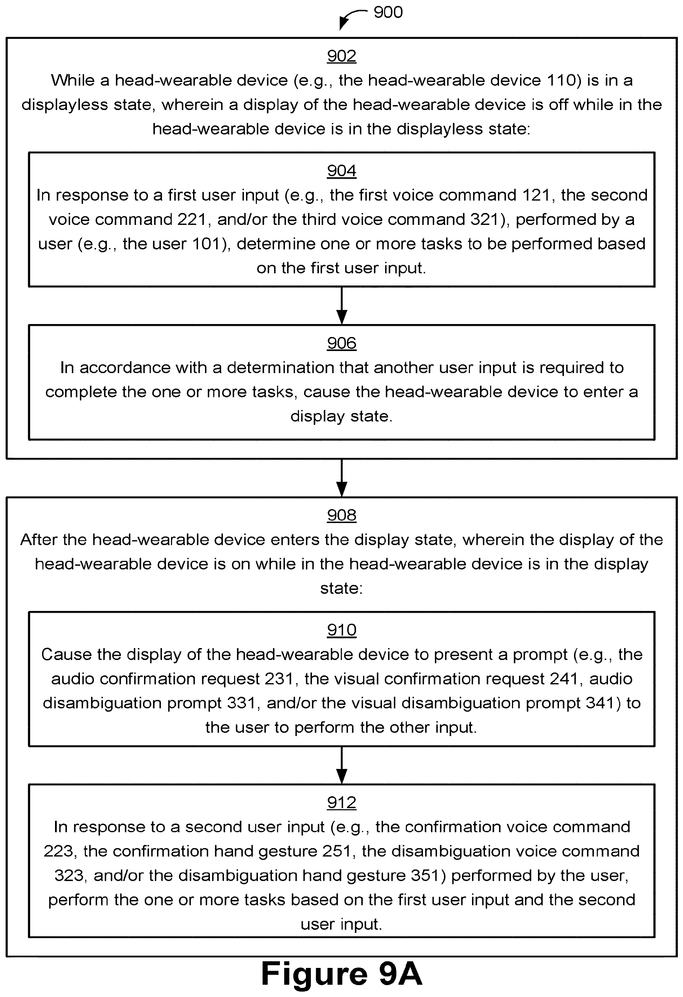

Figure 9A illustrates a flow diagram of a method of a head-wearable device automatically switching to a display state in accordance with a determination that an additional user input is required to complete one or more tasks, in accordance with some embodiments. Operations (e.g., steps) of the method 900 can be performed by one or more processors (e.g., central processing unit and/or MCU) of a system the head-wearable device 110 and/or the one or more other devices. At least some of the operations shown in Figure 9A correspond to instructions stored in a computer memory or computer-readable storage medium (e.g., storage, RAM, and/or memory) of the head-wearable device 110 and/or the one or more other devices. Operations of the method 900 can be performed by a single device alone or in conjunction with one or more processors and/or hardware components of another communicatively coupled device (e.g., the wrist-wearable device 115) and/or instructions stored in memory or computer-readable medium of the other device communicatively coupled to the head-wearable device 110. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(A1) Figure 9A shows a flow chart of a method 900 of a head-wearable device (e.g., the head-wearable device 110) automatically switching to a display state (e.g., the display mode) in accordance with a determination that an additional user input is required to complete one or more tasks, in accordance with some embodiments. The method 900 occurs at a computer-readable storage medium including executable instructions while the head-wearable device is worn by a user (e.g., the user 101). The method 900 includes, while the head-wearable device is in a displayless state (e.g., the displayless mode), wherein a display (e.g., the one or more displays of the head-wearable device 110) of the head-wearable device is off while in the head-wearable device is in the displayless state (902): (i) in response to an initial user input, (e.g., the first voice command 121, the second voice command 221, and/or the third voice command 321) performed by the user, determining one or more tasks (e.g., the one or more first tasks, the one or more second tasks, and/or the one or more third tasks) to be performed based on the initial user input (904) and (ii) in accordance with a determination that a follow-up user input (e.g., the user confirmation command and/or the disambiguation command) is required to complete the one or more tasks, causing the head-wearable device to enter a display state (e.g., the display mode) (906). The method 900 further includes, after the head-wearable device enters the display state, wherein the display of the head-wearable device is on while in the head-wearable device is in the display state (908): (i) causing the display of the head-wearable device to present a prompt (e.g., the audio confirmation request 231, the visual confirmation request 241, the audio disambiguation prompt 331, and/or the visual disambiguation prompt) to the user to perform the follow-up user input (910) and (ii) in response to a response user input (e.g., the confirmation voice command 223, the confirmation hand gesture 251, the disambiguation voice command 323, and/or the disambiguation hand gesture 351) performed by the user, performing the one or more tasks based on the first user input and the response user input (912).

(A2) In some embodiments of A2, the method 900 further includes, while the head-wearable device is in the displayless state: (i) in response to a second initial user input (e.g., the first voice command 121, as described in reference to Figures 1A-1C), performed by the user, determining one or more second tasks (e.g., the one or more first tasks, as described in reference to Figures 1A-1C) to be performed based on the second initial user input and (ii), in accordance with a determination that a second follow-up user input is not required to complete the one or more second tasks (e.g., as described in reference to Figure 1A-1C), performing the one or more second tasks based on the second initial user input.

(A3) In some embodiments of any of A1-A2, the method 900 further includes, while the head-wearable device is in the display state: (i) in response to a third initial user input, performed by the user, determining one or more third tasks to be performed based on the third initial user input and (ii) in accordance with a determination that a third follow-up user input is not required to complete the one or more third tasks, performing the one or more third tasks based on the third initial user input.

(A4) In some embodiments of any of A1-A3, the method 900 further includes, while the head-wearable device is in the display state and in accordance with a determination that the third follow-up user input (e.g., the confirmation command) is required to complete the one or more third tasks, perform the one or more third tasks: (i) causing the display of the head-wearable device to present another prompt (e.g., the visual confirmation request 241 and/or the audio confirmation request 231) to the user to perform the third follow-up user input and (ii) in response to another response user input (e.g., the confirmation voice command 223 and/or the confirmation hand gesture 251) performed by the user, performing the one or more third tasks based on the third user input and the other response user input.

(A5) In some embodiments of any of A1-A4, the method 900 further includes, after the head-wearable device enters the display state, in response to the response user input (e.g., the third voice command 321) performed by the user, and in accordance with a determination that an additional follow-up user input (e.g., the disambiguation command) is required to complete the one or more tasks: (i) causing the display of the head-wearable device to present an additional prompt (e.g., the visual disambiguation prompt 341 and/or the audio disambiguation prompt 331) to the user to perform the additional follow-up user input and (ii), in response to an additional response user input (e.g., the disambiguation voice command 323 and/or the disambiguation hand gesture 351) performed by the user, performing the one or more tasks based on the first user input, the response user input, and the additional response user input.

(A6) In some embodiments of any of A1-A5, the method 900 further includes, while the head-wearable device is in the display state, in response to the response user input performed by the user, causing the head-wearable device to enter the displayless state.

(A7) In some embodiments of any of A1-A6, (i) the determination that the follow-up user input is required to complete the one or more tasks is a determination that a user confirmation is required to complete the one or more tasks (e.g., as described in reference to Figures 2A-2C), (ii) the prompt is a confirmation prompt (e.g., the visual confirmation request 241 and/or the audio confirmation request 231), and (iii) the response user input is a confirmation input (e.g., the confirmation voice command 223 and/or the confirmation hand gesture 251).

(A8) In some embodiments of any of A1-A7, (i) the determination that the follow-up user input is required to complete the one or more tasks is a determination that further information, provided by the user, is required to complete the one or more tasks (e.g., as described in reference to Figures 3A-3C), (ii) the prompt is a disambiguation prompt (e.g., the visual disambiguation prompt 341 and/or the audio disambiguation prompt 331), prompting the user to provide the further information, and (iii) the response user input is a disambiguation input (e.g., the disambiguation voice command 323 and/or the disambiguation hand gesture 351) that provides the further information required to complete the one or more tasks.

(A9) In some embodiments of any of A1-A8, performing one or more tasks includes one or more of (i) causing one or more user interfaces to be presented at the display of the head-wearable device, (ii) causing one or more audio responses to be presented at a speaker of the head-wearable device, and/or (iii) causing one or more instructions to be sent to another device.

(A10) In some embodiments of any of A1-A9, the response user input is one or more of (i) a voice command detected at a microphone of the head-wearable device, (ii) a gaze gesture detected at a gaze-tracking component of the head-wearable device, and/or (iii) a hand gesture detected at a biopotential sensor of a wrist-wearable device communicatively coupled to the head-wearable device and/or at a forward-facing camera of the head-wearable device.

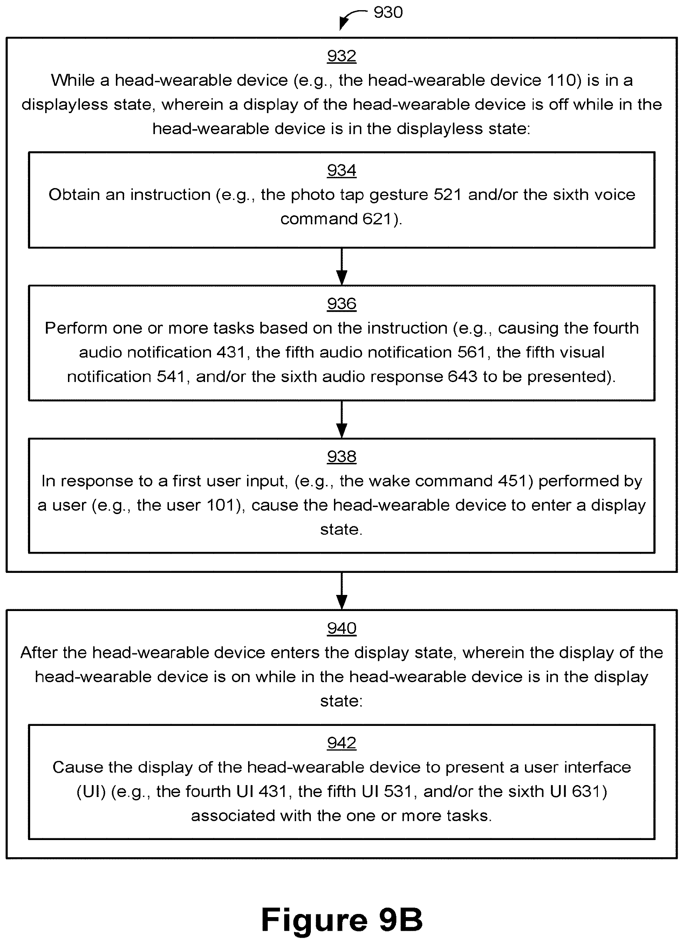

Figure 9B illustrates a flow diagram of a method of a head-wearable device, upon switching from a displayless state to a display state, contextually displaying a UI associated with one or more tasks performed while the head-wearable device was in the displayless state, in accordance with some embodiments. Operations (e.g., steps) of the method 930 can be performed by one or more processors (e.g., central processing unit and/or MCU) of a system the head-wearable device 110 and/or the one or more other devices. At least some of the operations shown in Figure 9B correspond to instructions stored in a computer memory or computer-readable storage medium (e.g., storage, RAM, and/or memory) of the head-wearable device 110 and/or the one or more other devices. Operations of the method 930 can be performed by a single device alone or in conjunction with one or more processors and/or hardware components of another communicatively coupled device (e.g., the wrist-wearable device 115) and/or instructions stored in memory or computer-readable medium of the other device communicatively coupled to the head-wearable device 110. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(B1) Figure 9B shows a flow chart of a method 930 of a head-wearable device (e.g., the head-wearable device 110), upon switching from a displayless state (e.g., the displayless mode) to a display state (e.g., the display mode), contextually displaying a UI associated with one or more tasks performed while the head-wearable device was in the displayless state, in accordance with some embodiments. The method 930 occurs at a computer-readable storage medium including executable instructions while the head-wearable device is worn by a user (e.g., the user 101). The method 930 includes, while the head-wearable device is in a displayless state, wherein a display (e.g., the one or more displays of the head-wearable device 110) of the head-wearable device is off while in the head-wearable device is in the displayless state (932): (i) obtaining an instruction (e.g., the fourth instruction, the fifth instruction, and/or the sixth instruction) (934), (ii) performing one or more tasks (e.g., the one or more fourth tasks, the one or more fifth tasks, and/or the one or more sixth tasks) based on the instruction (936), and (iii) in response to a wake command (e.g., the wake command 451), performed by the user, causing the head-wearable device to enter a display state (938). The method 930 further includes, after the head-wearable device enters the display state, wherein the display of the head-wearable device is on while in the head-wearable device is in the display state (940), causing the display of the head-wearable device to present a user interface (e.g., the fourth UI 431, the fifth UI 531, and/or the sixth UI 631) associated with the one or more tasks (942).

(B2) In some embodiments of B1, the method of 930 further includes, while the head-wearable device is in the display state: (i) obtaining a follow-up instruction, (ii) performing one or more follow-up tasks based on the follow-up instruction, and (iii) updating the user interface, presented at the display of the head-wearable device, based on the one or more follow-up tasks (e.g., as described in reference to Figure 4C).

(B3) In some embodiments of any of B1-B2, the method of 930 further includes, while the head-wearable device is in the display state and in response to a sleep command (e.g., the sleep command 551), performed by the user: (i) causing the head-wearable device to cease displaying the user interface associated with the one or more tasks and (ii) causing the head-wearable device to reenter the displayless state.

(B4) In some embodiments of any of B1-B3, the method of 930 further includes, after the head-wearable device reenters the displayless state, continuing to perform the one or more tasks based on the instruction (e.g., as described in reference to Figure 6D).

(B5) In some embodiments of any of B1-B4, the method of 930 further includes, while the head-wearable device is in the display state: (i) obtaining a second instruction (e.g., the fourth instruction, the fifth instruction, and/or the sixth instruction), distinct from the instruction, (ii) performing one or more second tasks (e.g., the one or more fourth tasks, the one or more fifth tasks, and/or the one or more sixth tasks), distinct from the one or more tasks, based on the second instruction, and (iii) in response to the wake command, performed by the user, causing the head-wearable device to enter the display state. The method 930 further includes, after the head-wearable device enters the display state, causing the display of the head-wearable device to present a second user interface (e.g., the fourth UI 431, the fifth UI 531, and/or the sixth UI 631), distinct from the user interface, associated with the one or more second tasks.

(B6) In some embodiments of any of B 1-B5, the causing the display of the head-wearable device to present the user interface associated with the one or more tasks is further in accordance with a determination that the wake command is performed while the one or more tasks are currently being performed (e.g., as described in reference to Figures 4A-4D and Figures 6A-6D).

(B7) In some embodiments of any of B 1-B6, the causing the display of the head-wearable device to present the user interface associated with the one or more tasks is further in accordance with a determination that the wake command is performed within a predetermined time period after the one or more tasks are completed (e.g., as described in reference to Figures 5A-5D).

(B8) In some embodiments of any of B1-B7, the method of 930 further includes, after the head-wearable device enters the display state and in accordance with a determination that the wake command is not performed within the predetermined time period after the one or more tasks are completed, causing the display of the head-wearable device to present a generic user interface not associated with the one or more tasks (e.g., as described in reference to Figure 5D).

(B9) In some embodiments of any of B1-B8, while the head-wearable device is in the displayless state, the performing the one or more tasks includes presenting one or more audio responses (e.g., the fourth audio notification 431, the fifth audio notification 561, and/or the sixth audio response 643), based on the one or more tasks, at one or more speakers of the head-wearable device.

(B10) In some embodiments of any of B1-B9, the instruction is one or more of (i) a command performed by the user (e.g., the photo tap gesture 521 and/or the sixth voice command 621), (ii) an application instruction from an application executed at the head-wearable device, and/or (iii) an incoming instruction from another device, communicatively coupled to the head-wearable device (e.g., receiving and facilitating a call with another user, as described in reference to Figure 4A).

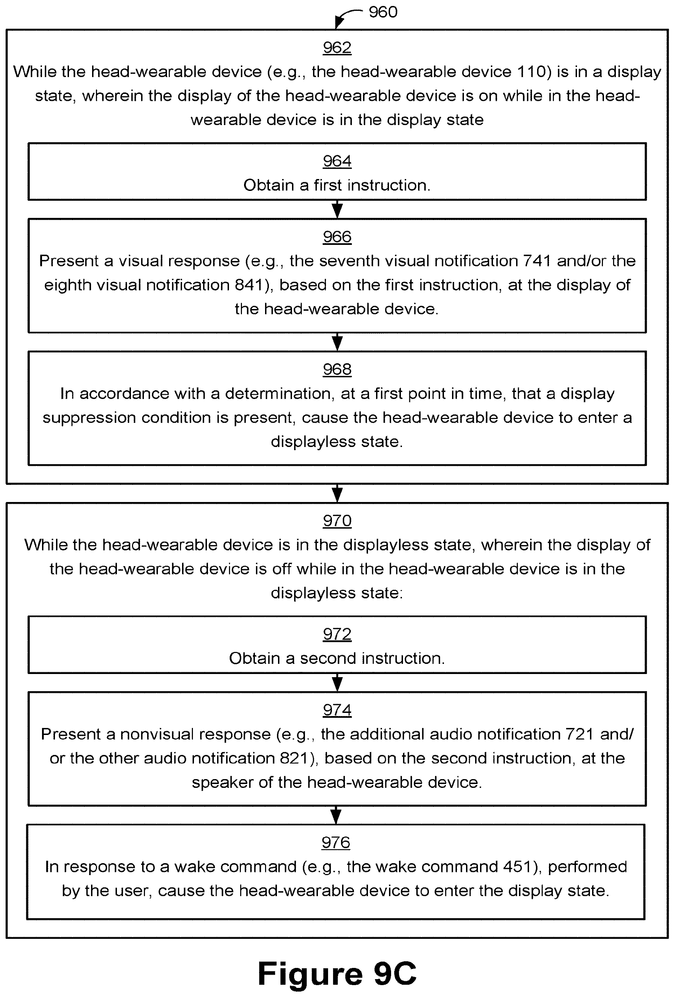

Figure 9C illustrates a flow diagram of a method of a head-wearable device automatically switching from a display state to a displayless state in accordance with a determination that a display suppression condition is present, in accordance with some embodiments. Operations (e.g., steps) of the method 960 can be performed by one or more processors (e.g., central processing unit and/or MCU) of a system the head-wearable device 110 and/or the one or more other devices. At least some of the operations shown in Figure 9C correspond to instructions stored in a computer memory or computer-readable storage medium (e.g., storage, RAM, and/or memory) of the head-wearable device 110 and/or the one or more other devices. Operations of the method 960 can be performed by a single device alone or in conjunction with one or more processors and/or hardware components of another communicatively coupled device (e.g., the wrist-wearable device 115) and/or instructions stored in memory or computer-readable medium of the other device communicatively coupled to the head-wearable device 110. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(C1) Figure 9C shows a flow chart of a method 960 of a head-wearable device (e.g., the head-wearable device 110) automatically switching from a display state (e.g., the display mode) to a displayless state (e.g., the displayless mode) in accordance with a determination that a display suppression condition is present, in accordance with some embodiments. The method 930 occurs at a computer-readable storage medium including executable instructions while a head-wearable device, including a display (e.g., the one or more displays of the head-wearable device 110) and a speaker (e.g., the one or more speakers of the head-wearable device 110), is worn by a user (e.g., the user 101). The method 960 includes, while the head-wearable device is in a display state, wherein the display of the head-wearable device is on while in the head-wearable device is in the display state (962): (i) obtaining a first instruction (e.g., the seventh instruction and/or the eighth instruction) (964), (ii) causing the head-wearable device to present a first response (e.g., the seventh visual notification 741 and/or the eighth visual notification 841), based on the first instruction, at the display of the head-wearable device (966), and (iii) in accordance with a determination, at a first point in time, that a display suppression condition (e.g., the safety display suppression condition, the attention display suppression condition, and/or the user-determined display suppression condition) is present, causing the head-wearable device to enter a displayless state (e.g., providing an instruction to the head-wearable device to cause the one or more displays of the head-wearable device to turn off and/or cease displaying one or more visual objects) (968). The method 960 further includes, while the head-wearable device is in the displayless state, wherein the display of the head-wearable device is off while in the head-wearable device is in the displayless state (970): (i) obtaining a second instruction (e.g., the additional instruction, described in reference to Figures 7A-7D, and/or the other instruction, described in reference to Figures 8A-8D) (972), (ii) causing the head-wearable device to present a second response (e.g., the additional audio notification 721 and/or the other audio notification 821), based on the second instruction, at the speaker of the head-wearable device (974), and (iii) in response to a wake command (e.g., the wake command 451), performed by the user at a second point in time, causing the head-wearable device to enter the display state (e.g., providing an instruction to the head-wearable device to cause the one or more displays of the head-wearable device to turn on and/or, once again, begin displaying one or more visual objects) (976).

(C2) In some embodiments of C1, the method of 960 further includes, while the head-wearable device is in the display state: (i) obtaining another instruction (e.g., the seventh instruction and/or the eighth instruction), distinct from the first instruction and (ii) causing the display of the head-wearable device to present another visual response (e.g., the seventh visual notification 741 and/or the eighth visual notification 841), distinct from the visual response, based on the first instruction.

(C3) In some embodiments of any of C1-C2, the method of 960 further includes, while the head-wearable device is in the displayless state: (i) obtaining an additional instruction (e.g., the additional instruction and/or the other instruction), distinct from the second instruction and (ii) causing the display of the head-wearable device to present an additional nonvisual response (e.g., the additional audio notification 721 and/or the other audio notification 821), distinct from the nonvisual response, based on the additional instruction.

(C4) In some embodiments of any of C1-C3, the causing the head-wearable device to reenter the display state is further in accordance with a determination, at the second point in time, that the display suppression condition is not present (e.g., as described in reference to Figures 7D and 8D).

*(C5)* In some embodiments of any of C1-C4, the method of 960 further includes, while the head-wearable device is in the display state and in accordance with the determination, at the first point in time, that the display suppression condition is present, causing the head-wearable device to present a switch-off (e.g., the prompt switch-off prompt 871), indicating to the user to perform a sleep command (e.g., the other sleep command 851). The causing the head-wearable device to enter the displayless state is further in accordance with a determination that the user has performed the sleep command.

(C6) In some embodiments of any of C1-C5, the method of 960 further includes, while the head-wearable device is in the displayless state and in accordance with a determination, at the second point in time, that the display suppression condition is not present, causing the head-wearable device to present a switch-on prompt (e.g., the switch-on prompt 881), indicating to the user to perform the wake command.

(C7) In some embodiments of any of C1-C6, the method of 960 further includes, while the head-wearable device is worn by the user and after obtaining the first instruction, performing one or more first tasks (e.g., the one or more seventh tasks and/or the one or more eighth tasks) based on the first instruction, wherein the visual response is further based on the one or more first tasks (e.g., as described in reference to Figures 7A and 8A). The method of 960 further includes, while the head-wearable device is in the displayless state, causing the speaker of the head-wearable device to present a second nonvisual response (e.g., the seventh audio notification) based on the first instruction and the one or more first tasks.

(C8) In some embodiments of any of C1-C7, the method of 960 further includes, while the head-wearable device is in the displayless state and after obtaining the second instruction, performing one or more second tasks (e.g., the one or more additional tasks, described in reference to Figures 7A-7D, and/or the one or more other tasks, described in reference to Figures 8A-8D) based on the second instruction, wherein the nonvisual response is further based on the one or more second tasks (e.g., as described in reference to Figures 7C and 8C). The method of 960 further includes, after causing the head-wearable device to reenter the display state, causing the display of the head-wearable device to present a second visual response (e.g., the additional visual notification 743) based on the second instruction and the one or second first tasks.

(C9) In some embodiments of any of C1-C8, the first instruction is one or more of (i) a first command performed by the user, (ii) a first application instruction from an application executed at the head-wearable device, and/or (iii) a first incoming instruction from another device, communicatively coupled to the head-wearable device (e.g., the incoming message, as described in reference to Figure 7A, and/or the second incoming message, as described in reference to Figure 8A). The second instruction is one or more of (i) a second command performed by the user, (ii) a second application instruction from an application executed at the head-wearable device, and/or (iii) a second incoming instruction from another device, communicatively coupled to the head-wearable device (e.g., the additional incoming message, as described in reference to Figure 7C, and/or the other incoming message, as described in reference to Figure 8C).

(C10) In some embodiments of any of C1-C9, the display suppression condition is one or more of (i) a safety display suppression condition, (ii) an attention display suppression condition, and/or (iii) a user-determined display suppression condition (e.g., as described in reference to Figures 7A-8D).

*(C11)* In some embodiments of any of C1-C10, the determination that the display suppression condition is present is based on one or more of: (i) image data captured at one or more forward-facing cameras of the head-wearable device, (ii) location data from a global positioning system device (e.g., a GPS device) associated with the user (e.g., a GPS device of the head-wearable device 110 and/or another device communicatively coupled to the head-wearable device 110), and (iii) inertial measurement unit (IMU) data from an IMU sensor associated with the user (e.g., an IMU sensor of the head-wearable device 110 and/or another device communicatively coupled to the head-wearable device 110) (e.g., as described in reference to Figures 7A-7D).

(C12) In some embodiments of any of C1-C11, the determination that the display suppression condition is present includes a determination of whether the user is driving a car (e.g., as described in reference to Figures 7A-7D).

*(C13)* In some embodiments of any of C1-C12, the determination of whether the user is driving the car includes a determination that the user is not in a passenger seat of the car (e.g., as described in reference to Figures 7A-7D).

(C14) In some embodiments of any of C1-C13, the determination that the display suppression condition is present includes a determination of whether the user is approaching an object and/or another person (e.g., the user is walking or running toward another person, a wall, an obstacle, etc., as described in reference to Figures 7A-7D).

(C15) In some embodiments of any of C1-C14, the first point in time is one or more of: (i) a time at a predetermined interval (e.g., ten seconds, one minute, five minutes, etc.), (ii) a time when the first instruction is received, and (iii) a time when one or more sensors determine that the suppression condition is present (e.g., as described in reference to Figures 7A-7D).

(C16) In some embodiments of any of C1-C15, the method of 960 further includes, while the head-wearable device is worn by the user, while the head-wearable device is in the displayless state, and after obtaining the second instruction, causing another speaker (e.g., a speaker of the car, as described in reference to Figures 7A-7D), communicatively coupled to the head-wearable device, to present the nonvisual response based on the second instruction

(D1) In accordance with some embodiments, a system that includes a head-wearable device (e.g., an XR headset), and the system is configured to perform operations corresponding to any of A1-C10.

(E1) In accordance with some embodiments, a non-transitory computer readable storage medium including instructions that, when executed by a computing device in communication with a head-wearable device (e.g., an XR headset), cause the computer device to perform operations corresponding to any of A1- C10.

(F1) In accordance with some embodiments, a wearable device (e.g., an XR headset), configured to perform operations that correspond to any of A1-C10.

(G1) In accordance with some embodiments, an intermediary processing device (e.g., configured to offload processing operations for a head-worn device such as an XR headset) configured to perform or cause performance of operations that correspond to any of A1-C10.

### Example Extended-Reality Systems

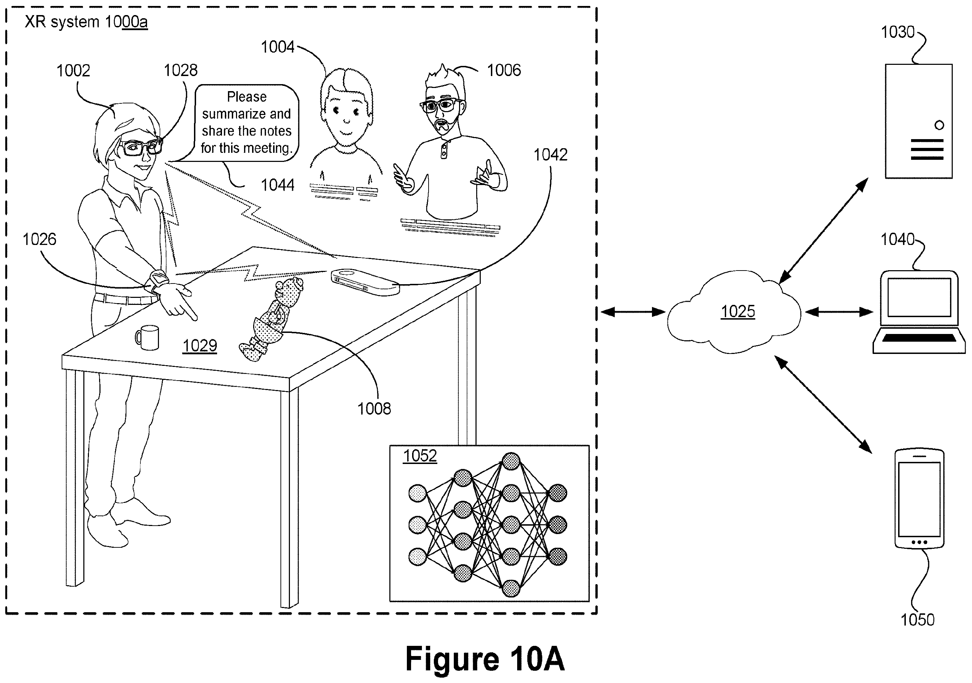

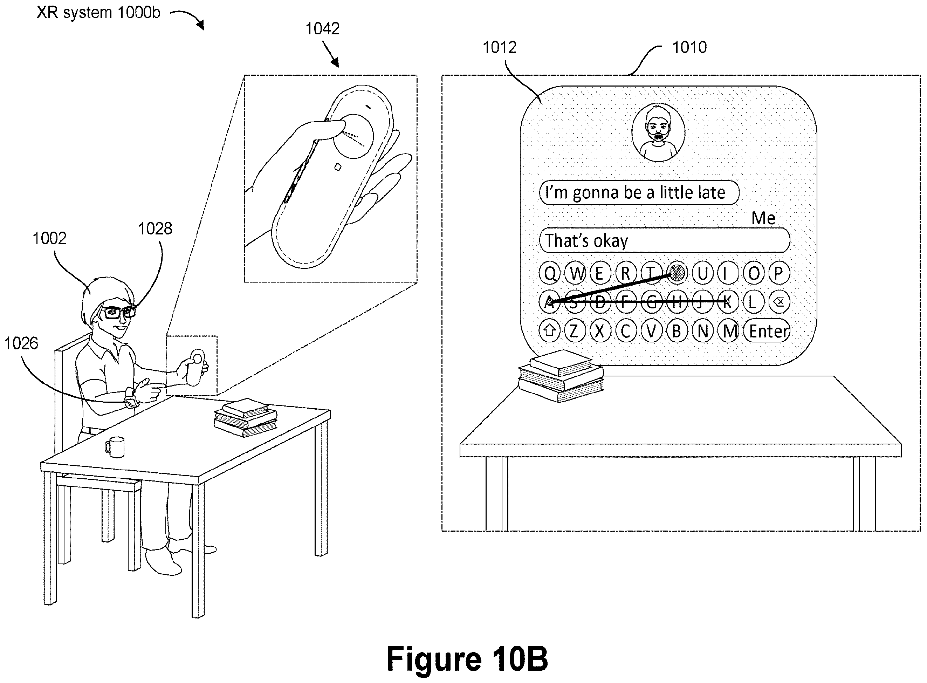

Figures 10A 10B, 10C-1, and 10C-2, illustrate example XR systems that include AR and MR systems, in accordance with some embodiments. Figure 10A shows a first XR system 1000a and first example user interactions using a wrist-wearable device 1026, a head-wearable device (e.g., AR device 1028), and/or a HIPD 1042. Figure 10B shows a second XR system 1000b and second example user interactions using a wrist-wearable device 1026, AR device 1028, and/or an HIPD 1042. Figures 10C-1 and 10C-2 show a third MR system 1000c and third example user interactions using a wrist-wearable device 1026, a head-wearable device (e.g., an MR device such as a VR device), and/or an HIPD 1042. As the skilled artisan will appreciate upon reading the descriptions provided herein, the above-example AR and MR systems (described in detail below) can perform various functions and/or operations.

The wrist-wearable device 1026, the head-wearable devices, and/or the HIPD 1042 can communicatively couple via a network 1025 (e.g., cellular, near field, Wi-Fi, personal area network, wireless LAN). Additionally, the wrist-wearable device 1026, the head-wearable device, and/or the HIPD 1042 can also communicatively couple with one or more servers 1030, computers 1040 (e.g., laptops, computers), mobile devices 1050 (e.g., smartphones, tablets), and/or other electronic devices via the network 1025 (e.g., cellular, near field, Wi-Fi, personal area network, wireless LAN). Similarly, a smart textile-based garment, when used, can also communicatively couple with the wrist-wearable device 1026, the head-wearable device(s), the HIPD 1042, the one or more servers 1030, the computers 1040, the mobile devices 1050, and/or other electronic devices via the network 1025 to provide inputs.

Turning to Figure 10A, a user 1002 is shown wearing the wrist-wearable device 1026 and the AR device 1028 and having the HIPD 1042 on their desk. The wrist-wearable device 1026, the AR device 1028, and the HIPD 1042 facilitate user interaction with an AR environment. In particular, as shown by the first AR system 1000a, the wrist-wearable device 1026, the AR device 1028, and/or the HIPD 1042 cause presentation of one or more avatars 1004, digital representations of contacts 1006, and virtual objects 1008. As discussed below, the user 1002 can interact with the one or more avatars 1004, digital representations of the contacts 1006, and virtual objects 1008 via the wrist-wearable device 1026, the AR device 1028, and/or the HIPD 1042. In addition, the user 1002 is also able to directly view physical objects in the environment, such as a physical table 1029, through transparent lens(es) and waveguide(s) of the AR device 1028. Alternatively, an MR device could be used in place of the AR device 1028 and a similar user experience can take place, but the user would not be directly viewing physical objects in the environment, such as table 1029, and would instead be presented with a virtual reconstruction of the table 1029 produced from one or more sensors of the MR device (e.g., an outward facing camera capable of recording the surrounding environment).

The user 1002 can use any of the wrist-wearable device 1026, the AR device 1028 (e.g., through physical inputs at the AR device and/or built-in motion tracking of a user's extremities), a smart-textile garment, externally mounted extremity tracking device, the HIPD 1042 to provide user inputs, etc. For example, the user 1002 can perform one or more hand gestures that are detected by the wrist-wearable device 1026 (e.g., using one or more EMG sensors and/or IMUs built into the wrist-wearable device) and/or AR device 1028 (e.g., using one or more image sensors or cameras) to provide a user input. Alternatively, or additionally, the user 1002 can provide a user input via one or more touch surfaces of the wrist-wearable device 1026, the AR device 1028, and/or the HIPD 1042, and/or voice commands captured by a microphone of the wrist-wearable device 1026, the AR device 1028, and/or the HIPD 1042. The wrist-wearable device 1026, the AR device 1028, and/or the HIPD 1042 include an artificially intelligent digital assistant to help the user in providing a user input (e.g., completing a sequence of operations, suggesting different operations or commands, providing reminders, confirming a command). For example, the digital assistant can be invoked through an input occurring at the AR device 1028 (e.g., via an input at a temple arm of the AR device 1028). In some embodiments, the user 1002 can provide a user input via one or more facial gestures and/or facial expressions. For example, cameras of the wrist-wearable device 1026, the AR device 1028, and/or the HIPD 1042 can track the user 1002's eyes for navigating a user interface.

The wrist-wearable device 1026, the AR device 1028, and/or the HIPD 1042 can operate alone or in conjunction to allow the user 1002 to interact with the AR environment. In some embodiments, the HIPD 1042 is configured to operate as a central hub or control center for the wrist-wearable device 1026, the AR device 1028, and/or another communicatively coupled device. For example, the user 1002 can provide an input to interact with the AR environment at any of the wrist-wearable device 1026, the AR device 1028, and/or the HIPD 1042, and the HIPD 1042 can identify one or more back-end and front-end tasks to cause the performance of the requested interaction and distribute instructions to cause the performance of the one or more back-end and front-end tasks at the wrist-wearable device 1026, the AR device 1028, and/or the HIPD 1042. In some embodiments, a back-end task is a background-processing task that is not perceptible by the user (e.g., rendering content, decompression, compression, application-specific operations), and a front-end task is a user-facing task that is perceptible to the user (e.g., presenting information to the user, providing feedback to the user). The HIPD 1042 can perform the back-end tasks and provide the wrist-wearable device 1026 and/or the AR device 1028 operational data corresponding to the performed back-end tasks such that the wrist-wearable device 1026 and/or the AR device 1028 can perform the front-end tasks. In this way, the HIPD 1042, which has more computational resources and greater thermal headroom than the wrist-wearable device 1026 and/or the AR device 1028, performs computationally intensive tasks and reduces the computer resource utilization and/or power usage of the wrist-wearable device 1026 and/or the AR device 1028.

In the example shown by the first AR system 1000a, the HIPD 1042 identifies one or more back-end tasks and front-end tasks associated with a user request to initiate an AR video call with one or more other users (represented by the avatar 1004 and the digital representation of the contact 1006) and distributes instructions to cause the performance of the one or more back-end tasks and front-end tasks. In particular, the HIPD 1042 performs back-end tasks for processing and/or rendering image data (and other data) associated with the AR video call and provides operational data associated with the performed back-end tasks to the AR device 1028 such that the AR device 1028 performs front-end tasks for presenting the AR video call (e.g., presenting the avatar 1004 and the digital representation of the contact 1006).

In some embodiments, the HIPD 1042 can operate as a focal or anchor point for causing the presentation of information. This allows the user 1002 to be generally aware of where information is presented. For example, as shown in the first AR system 1000a, the avatar 1004 and the digital representation of the contact 1006 are presented above the HIPD 1042. In particular, the HIPD 1042 and the AR device 1028 operate in conjunction to determine a location for presenting the avatar 1004 and the digital representation of the contact 1006. In some embodiments, information can be presented within a predetermined distance from the HIPD 1042 (e.g., within five meters). For example, as shown in the first AR system 1000a, virtual object 1008 is presented on the desk some distance from the HIPD 1042. Similar to the above example, the HIPD 1042 and the AR device 1028 can operate in conjunction to determine a location for presenting the virtual object 1008. Alternatively, in some embodiments, presentation of information is not bound by the HIPD 1042. More specifically, the avatar 1004, the digital representation of the contact 1006, and the virtual object 1008 do not have to be presented within a predetermined distance of the HIPD 1042. While an AR device 1028 is described working with an HIPD, an MR headset can be interacted with in the same way as the AR device 1028.

User inputs provided at the wrist-wearable device 1026, the AR device 1028, and/or the HIPD 1042 are coordinated such that the user can use any device to initiate, continue, and/or complete an operation. For example, the user 1002 can provide a user input to the AR device 1028 to cause the AR device 1028 to present the virtual object 1008 and, while the virtual object 1008 is presented by the AR device 1028, the user 1002 can provide one or more hand gestures via the wrist-wearable device 1026 to interact and/or manipulate the virtual object 1008. While an AR device 1028 is described working with a wrist-wearable device 1026, an MR headset can be interacted with in the same way as the AR device 1028.

### Integration of Artificial Intelligence with XR Systems

Figure 10A illustrates an interaction in which an artificially intelligent virtual assistant can assist in requests made by a user 1002. The AI virtual assistant can be used to complete open-ended requests made through natural language inputs by a user 1002. For example, in Figure 10A the user 1002 makes an audible request 1044 to summarize the conversation and then share the summarized conversation with others in the meeting. In addition, the AI virtual assistant is configured to use sensors of the XR system (e.g., cameras of an XR headset, microphones, and various other sensors of any of the devices in the system) to provide contextual prompts to the user for initiating tasks.

Figure 10A also illustrates an example neural network 1052 used in Artificial Intelligence applications. Uses of Artificial Intelligence (AI) are varied and encompass many different aspects of the devices and systems described herein. AI capabilities cover a diverse range of applications and deepen interactions between the user 1002 and user devices (e.g., the AR device 1028, an MR device 1032, the HIPD 1042, the wrist-wearable device 1026). The AI discussed herein can be derived using many different training techniques. While the primary AI model example discussed herein is a neural network, other AI models can be used. Non-limiting examples of AI models include artificial neural networks (ANNs), deep neural networks (DNNs), convolution neural networks (CNNs), recurrent neural networks (RNNs), large language models (LLMs), long short-term memory networks, transformer models, decision trees, random forests, support vector machines, k-nearest neighbors, genetic algorithms, Markov models, Bayesian networks, fuzzy logic systems, and deep reinforcement learnings, etc. The AI models can be implemented at one or more of the user devices, and/or any other devices described herein. For devices and systems herein that employ multiple AI models, different models can be used depending on the task. For example, for a natural-language artificially intelligent virtual assistant, an LLM can be used and for the object detection of a physical environment, a DNN can be used instead.

In another example, an AI virtual assistant can include many different AI models and based on the user's request, multiple AI models may be employed (concurrently, sequentially or a combination thereof). For example, an LLM-based AI model can provide instructions for helping a user follow a recipe and the instructions can be based in part on another AI model that is derived from an ANN, a DNN, an RNN, etc. that is capable of discerning what part of the recipe the user is on (e.g., object and scene detection).

As AI training models evolve, the operations and experiences described herein could potentially be performed with different models other than those listed above, and a person skilled in the art would understand that the list above is non-limiting.

A user 1002 can interact with an AI model through natural language inputs captured by a voice sensor, text inputs, or any other input modality that accepts natural language and/or a corresponding voice sensor module. In another instance, input is provided by tracking the eye gaze of a user 1002 via a gaze tracker module. Additionally, the AI model can also receive inputs beyond those supplied by a user 1002. For example, the AI can generate its response further based on environmental inputs (e.g., temperature data, image data, video data, ambient light data, audio data, GPS location data, inertial measurement (i.e., user motion) data, pattern recognition data, magnetometer data, depth data, pressure data, force data, neuromuscular data, heart rate data, temperature data, sleep data) captured in response to a user request by various types of sensors and/or their corresponding sensor modules. The sensors' data can be retrieved entirely from a single device (e.g., AR device 1028) or from multiple devices that are in communication with each other (e.g., a system that includes at least two of an AR device 1028, an MR device 1032, the HIPD 1042, the wrist-wearable device 1026, etc.). The AI model can also access additional information (e.g., one or more servers 1030, the computers 1040, the mobile devices 1050, and/or other electronic devices) via a network 1025.

A non-limiting list of AI-enhanced functions includes but is not limited to image recognition, speech recognition (e.g., automatic speech recognition), text recognition (e.g., scene text recognition), pattern recognition, natural language processing and understanding, classification, regression, clustering, anomaly detection, sequence generation, content generation, and optimization. In some embodiments, AI-enhanced functions are fully or partially executed on cloud-computing platforms communicatively coupled to the user devices (e.g., the AR device 1028, an MR device 1032, the HIPD 1042, the wrist-wearable device 1026) via the one or more networks. The cloud-computing platforms provide scalable computing resources, distributed computing, managed AI services, interference acceleration, pre-trained models, APIs and/or other resources to support comprehensive computations required by the AI-enhanced function.

Example outputs stemming from the use of an AI model can include natural language responses, mathematical calculations, charts displaying information, audio, images, videos, texts, summaries of meetings, predictive operations based on environmental factors, classifications, pattern recognitions, recommendations, assessments, or other operations. In some embodiments, the generated outputs are stored on local memories of the user devices (e.g., the AR device 1028, an MR device 1032, the HIPD 1042, the wrist-wearable device 1026), storage options of the external devices (servers, computers, mobile devices, etc.), and/or storage options of the cloud-computing platforms.

The AI-based outputs can be presented across different modalities (e.g., audio-based, visual-based, haptic-based, and any combination thereof) and across different devices of the XR system described herein. Some visual-based outputs can include the displaying of information on XR augments of an XR headset, user interfaces displayed at a wrist-wearable device, laptop device, mobile device, etc. On devices with or without displays (e.g., HIPD 1042), haptic feedback can provide information to the user 1002. An AI model can also use the inputs described above to determine the appropriate modality and device(s) to present content to the user (e.g., a user walking on a busy road can be presented with an audio output instead of a visual output to avoid distracting the user 1002).

### Example Augmented Reality Interaction

Figure 10B shows the user 1002 wearing the wrist-wearable device 1026 and the AR device 1028 and holding the HIPD 1042. In the second AR system 1000b, the wrist-wearable device 1026, the AR device 1028, and/or the HIPD 1042 are used to receive and/or provide one or more messages to a contact of the user 1002. In particular, the wrist-wearable device 1026, the AR device 1028, and/or the HIPD 1042 detect and coordinate one or more user inputs to initiate a messaging application and prepare a response to a received message via the messaging application.

In some embodiments, the user 1002 initiates, via a user input, an application on the wrist-wearable device 1026, the AR device 1028, and/or the HIPD 1042 that causes the application to initiate on at least one device. For example, in the second AR system 1000b the user 1002 performs a hand gesture associated with a command for initiating a messaging application (represented by messaging user interface 1012); the wrist-wearable device 1026 detects the hand gesture; and, based on a determination that the user 1002 is wearing the AR device 1028, causes the AR device 1028 to present a messaging user interface 1012 of the messaging application. The AR device 1028 can present the messaging user interface 1012 to the user 1002 via its display (e.g., as shown by user 1002's field of view 1010). In some embodiments, the application is initiated and can be run on the device (e.g., the wrist-wearable device 1026, the AR device 1028, and/or the HIPD 1042) that detects the user input to initiate the application, and the device provides another device operational data to cause the presentation of the messaging application. For example, the wrist-wearable device 1026 can detect the user input to initiate a messaging application, initiate and run the messaging application, and provide operational data to the AR device 1028 and/or the HIPD 1042 to cause presentation of the messaging application. Alternatively, the application can be initiated and run at a device other than the device that detected the user input. For example, the wrist-wearable device 1026 can detect the hand gesture associated with initiating the messaging application and cause the HIPD 1042 to run the messaging application and coordinate the presentation of the messaging application.

Further, the user 1002 can provide a user input provided at the wrist-wearable device 1026, the AR device 1028, and/or the HIPD 1042 to continue and/or complete an operation initiated at another device. For example, after initiating the messaging application via the wrist-wearable device 1026 and while the AR device 1028 presents the messaging user interface 1012, the user 1002 can provide an input at the HIPD 1042 to prepare a response (e.g., shown by the swipe gesture performed on the HIPD 1042). The user 1002's gestures performed on the HIPD 1042 can be provided and/or displayed on another device. For example, the user 1002's swipe gestures performed on the HIPD 1042 are displayed on a virtual keyboard of the messaging user interface 1012 displayed by the AR device 1028.

In some embodiments, the wrist-wearable device 1026, the AR device 1028, the HIPD 1042, and/or other communicatively coupled devices can present one or more notifications to the user 1002. The notification can be an indication of a new message, an incoming call, an application update, a status update, etc. The user 1002 can select the notification via the wrist-wearable device 1026, the AR device 1028, or the HIPD 1042 and cause presentation of an application or operation associated with the notification on at least one device. For example, the user 1002 can receive a notification that a message was received at the wrist-wearable device 1026, the AR device 1028, the HIPD 1042, and/or other communicatively coupled device and provide a user input at the wrist-wearable device 1026, the AR device 1028, and/or the HIPD 1042 to review the notification, and the device detecting the user input can cause an application associated with the notification to be initiated and/or presented at the wrist-wearable device 1026, the AR device 1028, and/or the HIPD 1042.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 1028 can present to the user 1002 game application data and the HIPD 1042 can use a controller to provide inputs to the game. Similarly, the user 1002 can use the wrist-wearable device 1026 to initiate a camera of the AR device 1028, and the user can use the wrist-wearable device 1026, the AR device 1028, and/or the HIPD 1042 to manipulate the image capture (e.g., zoom in or out, apply filters) and capture image data.

While an AR device 1028 is shown being capable of certain functions, it is understood that an AR device can be an AR device with varying functionalities based on costs and market demands. For example, an AR device may include a single output modality such as an audio output modality. In another example, the AR device may include a low-fidelity display as one of the output modalities, where simple information (e.g., text and/or low-fidelity images/video) is capable of being presented to the user. In yet another example, the AR device can be configured with face-facing light emitting diodes (LEDs) configured to provide a user with information, e.g., an LED around the right-side lens can illuminate to notify the wearer to turn right while directions are being provided or an LED on the left-side can illuminate to notify the wearer to turn left while directions are being provided. In another embodiment, the AR device can include an outward-facing projector such that information (e.g., text information, media) may be displayed on the palm of a user's hand or other suitable surface (e.g., a table, whiteboard). In yet another embodiment, information may also be provided by locally dimming portions of a lens to emphasize portions of the environment in which the user's attention should be directed. Some AR devices can present AR augments either monocularly or binocularly (e.g., an AR augment can be presented at only a single display associated with a single lens as opposed presenting an AR augmented at both lenses to produce a binocular image). In some instances an AR device capable of presenting AR augments binocularly can optionally display AR augments monocularly as well (e.g., for power-saving purposes or other presentation considerations). These examples are non-exhaustive and features of one AR device described above can be combined with features of another AR device described above. While features and experiences of an AR device have been described generally in the preceding sections, it is understood that the described functionalities and experiences can be applied in a similar manner to an MR headset, which is described below in the proceeding sections.

### Example Mixed Reality Interaction

Turning to Figures 10C-1 and 10C-2, the user 1002 is shown wearing the wrist-wearable device 1026 and an MR device 1032 (e.g., a device capable of providing either an entirely VR experience or an MR experience that displays object(s) from a physical environment at a display of the device) and holding the HIPD 1042. In the third AR system 1000c, the wrist-wearable device 1026, the MR device 1032, and/or the HIPD 1042 are used to interact within an MR environment, such as a VR game or other MR/VR application. While the MR device 1032 presents a representation of a VR game (e.g., first MR game environment 1020) to the user 1002, the wrist-wearable device 1026, the MR device 1032, and/or the HIPD 1042 detect and coordinate one or more user inputs to allow the user 1002 to interact with the VR game.

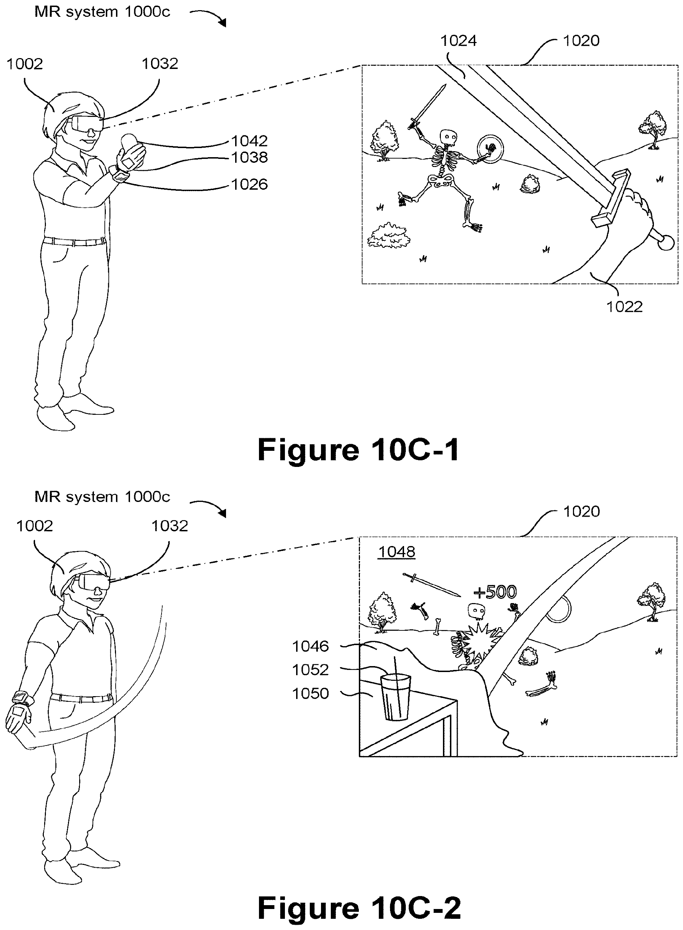

In some embodiments, the user 1002 can provide a user input via the wrist-wearable device 1026, the MR device 1032, and/or the HIPD 1042 that causes an action in a corresponding MR environment. For example, the user 1002 in the third MR system 1000c (shown in Figure 10C-1) raises the HIPD 1042 to prepare for a swing in the first MR game environment 1020. The MR device 1032, responsive to the user 1002 raising the HIPD 1042, causes the MR representation of the user 1022 to perform a similar action (e.g., raise a virtual object, such as a virtual sword 1024). In some embodiments, each device uses respective sensor data and/or image data to detect the user input and provide an accurate representation of the user 1002's motion. For example, image sensors (e.g., SLAM cameras or other cameras) of the HIPD 1042 can be used to detect a position of the HIPD 1042 relative to the user 1002's body such that the virtual object can be positioned appropriately within the first MR game environment 1020; sensor data from the wrist-wearable device 1026 can be used to detect a velocity at which the user 1002 raises the HIPD 1042 such that the MR representation of the user 1022 and the virtual sword 1024 are synchronized with the user 1002's movements; and image sensors of the MR device 1032 can be used to represent the user 1002's body, boundary conditions, or real-world objects within the first MR game environment 1020.

In Figure 10C-2, the user 1002 performs a downward swing while holding the HIPD 1042. The user 1002's downward swing is detected by the wrist-wearable device 1026, the MR device 1032, and/or the HIPD 1042 and a corresponding action is performed in the first MR game environment 1020. In some embodiments, the data captured by each device is used to improve the user's experience within the MR environment. For example, sensor data of the wrist-wearable device 1026 can be used to determine a speed and/or force at which the downward swing is performed and image sensors of the HIPD 1042 and/or the MR device 1032 can be used to determine a location of the swing and how it should be represented in the first MR game environment 1020, which, in turn, can be used as inputs for the MR environment (e.g., game mechanics, which can use detected speed, force, locations, and/or aspects of the user 1002's actions to classify a user's inputs (e.g., user performs a light strike, hard strike, critical strike, glancing strike, miss) or calculate an output (e.g., amount of damage)).

Figure 10C-2 further illustrates that a portion of the physical environment is reconstructed and displayed at a display of the MR device 1032 while the MR game environment 1020 is being displayed. In this instance, a reconstruction of the physical environment 1046 is displayed in place of a portion of the MR game environment 1020 when object(s) in the physical environment are potentially in the path of the user (e.g., a collision with the user and an object in the physical environment are likely). Thus, this example MR game environment 1020 includes (i) an immersive VR portion 1048 (e.g., an environment that does not have a corollary counterpart in a nearby physical environment) and (ii) a reconstruction of the physical environment 1046 (e.g., table 1050 and cup 1052). While the example shown here is an MR environment that shows a reconstruction of the physical environment to avoid collisions, other uses of reconstructions of the physical environment can be used, such as defining features of the virtual environment based on the surrounding physical environment (e.g., a virtual column can be placed based on an object in the surrounding physical environment (e.g., a tree)).

While the wrist-wearable device 1026, the MR device 1032, and/or the HIPD 1042 are described as detecting user inputs, in some embodiments, user inputs are detected at a single device (with the single device being responsible for distributing signals to the other devices for performing the user input). For example, the HIPD 1042 can operate an application for generating the first MR game environment 1020 and provide the MR device 1032 with corresponding data for causing the presentation of the first MR game environment 1020, as well as detect the user 1002's movements (while holding the HIPD 1042) to cause the performance of corresponding actions within the first MR game environment 1020. Additionally or alternatively, in some embodiments, operational data (e.g., sensor data, image data, application data, device data, and/or other data) of one or more devices is provided to a single device (e.g., the HIPD 1042) to process the operational data and cause respective devices to perform an action associated with processed operational data.

In some embodiments, the user 1002 can wear a wrist-wearable device 1026, wear an MR device 1032, wear smart textile-based garments 1038 (e.g., wearable haptic gloves), and/or hold an HIPD 1042 device. In this embodiment, the wrist-wearable device 1026, the MR device 1032, and/or the smart textile-based garments 1038 are used to interact within an MR environment (e.g., any AR or MR system described above in reference to Figures 10A-10B). While the MR device 1032 presents a representation of an MR game (e.g., second MR game environment 1020) to the user 1002, the wrist-wearable device 1026, the MR device 1032, and/or the smart textile-based garments 1038 detect and coordinate one or more user inputs to allow the user 1002 to interact with the MR environment.

In some embodiments, the user 1002 can provide a user input via the wrist-wearable device 1026, an HIPD 1042, the MR device 1032, and/or the smart textile-based garments 1038 that causes an action in a corresponding MR environment. In some embodiments, each device uses respective sensor data and/or image data to detect the user input and provide an accurate representation of the user 1002's motion. While four different input devices are shown (e.g., a wrist-wearable device 1026, an MR device 1032, an HIPD 1042, and a smart textile-based garment 1038) each one of these input devices entirely on its own can provide inputs for fully interacting with the MR environment. For example, the wrist-wearable device can provide sufficient inputs on its own for interacting with the MR environment. In some embodiments, if multiple input devices are used (e.g., a wrist-wearable device and the smart textile-based garment 1038) sensor fusion can be utilized to ensure inputs are correct. While multiple input devices are described, it is understood that other input devices can be used in conjunction or on their own instead, such as but not limited to external motion-tracking cameras, other wearable devices fitted to different parts of a user, apparatuses that allow for a user to experience walking in an MR environment while remaining substantially stationary in the physical environment, etc.

As described above, the data captured by each device is used to improve the user's experience within the MR environment. Although not shown, the smart textile-based garments 1038 can be used in conjunction with an MR device and/or an HIPD 1042.

While some experiences are described as occurring on an AR device and other experiences are described as occurring on an MR device, one skilled in the art would appreciate that experiences can be ported over from an MR device to an AR device, and vice versa.

Some definitions of devices and components that can be included in some or all of the example devices discussed are defined here for ease of reference. A skilled artisan will appreciate that certain types of the components described may be more suitable for a particular set of devices, and less suitable for a different set of devices. But subsequent reference to the components defined here should be considered to be encompassed by the definitions provided.

In some embodiments example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices, and/or a subset of components of one or more electronic devices and facilitates communication, and/or data processing and/or data transfer between the respective electronic devices and/or electronic components.

The foregoing descriptions of Figures 10A-10C-2 provided above are intended to augment the description provided in reference to Figures 1A-9C. While terms in the following description may not be identical to terms used in the foregoing description, a person having ordinary skill in the art would understand these terms to have the same meaning.

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc. may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A method comprising:
while a head-wearable device, including a display and a speaker, is worn by a user:
while the head-wearable device is in a display state, wherein the display of the head-wearable device is on while in the head-wearable device is in the display state:
receiving a first instruction;
presenting a visual response based on the first instruction at the display of the head-wearable device; and
in accordance with a determination, at a first point in time, that a display suppression condition is present, causing the head-wearable device to enter a displayless state;
while the head-wearable device is in the displayless state, wherein the display of the head-wearable device is off while in the head-wearable device is in the displayless state:
receiving a second instruction;
presenting a nonvisual response based on the second instruction at the speaker of the head-wearable device; and
in response to a wake command, performed by the user at a second point in time, causing the head-wearable device to reenter the display state.

2. The method of claim 1, further comprising:
while the head-wearable device is worn by the user:
while the head-wearable device is in the display state:
receiving another instruction, distinct from the first instruction;
causing the display of the head-wearable device to present another visual response, distinct from the visual response, based on the first instruction.

3. The method of claim 1 or claim 2, further comprising:
while the head-wearable device is worn by the user:
while the head-wearable device is in the displayless state:
receiving an additional instruction, distinct from the second instruction;
causing the display of the head-wearable device to present an additional nonvisual response, distinct from the nonvisual response, based on the additional instruction.

4. The method of any preceding claim, wherein the causing the head-wearable device to reenter the display state is further in accordance with a determination, at the second point in time, that the display suppression condition is not present.

5. The method of any preceding claim, further comprising:
while the head-wearable device is worn by the user:
while the head-wearable device is in the display state:
in accordance with the determination, at the first point in time, that the display suppression condition is present, causing the head-wearable device to present a switch-off prompt, indicating to the user to perform a sleep command; and
wherein the causing the head-wearable device to enter the displayless state is further in accordance with a determination that the user has performed the sleep command.

6. The method of any preceding claim, further comprising:
while the head-wearable device is worn by the user:
while the head-wearable device is in the displayless state:
in accordance with a determination, at the second point in time, that the display suppression condition is not present, causing the head-wearable device to present a switch-on prompt, indicating, to the user, to perform the wake command.

7. The method of any preceding claim, further comprising:
while the head-wearable device is worn by the user:
while the head-wearable device is in the display state:
after receiving the first instruction, perform one or more first tasks based on the first instruction, wherein the visual response is further based on the one or more first tasks; and
while the head-wearable device is in the displayless state:
causing the speaker of the head-wearable device to present a second nonvisual response based on the first instruction and the one or more first tasks.

8. The method of any preceding claim, further comprising:
while the head-wearable device is worn by the user:
while the head-wearable device is in the displayless state:
after receiving the second instruction, perform one or more second tasks based on the second instruction, wherein the nonvisual response is further based on the one or more second tasks; and
after causing the head-wearable device to reenter the display state:
causing the display of the head-wearable device to present a second visual response based on the second instruction and the one or second first tasks.

9. The method of any preceding claim, wherein:
the first instruction is one or more of:
a first command performed by the user;
a first application instruction from an application executed at the head-wearable device; and
a first incoming instruction from another device, communicatively coupled to the head-wearable device; and
the second instruction is one or more of:
a second command performed by the user;
a second application instruction from an application executed at the head-wearable device; and
a second incoming instruction from another device, communicatively coupled to the head-wearable device.

10. The method of any preceding claim, wherein the display suppression condition is one or more of:
a safety display suppression condition;
an attention display suppression condition; and
a user-determined display suppression condition.

11. The method of any preceding claim, wherein the determination that the display suppression condition is present is based on one or more of:
image data captured at one or more forward-facing cameras of the head-wearable device;
location data from a global positioning system device associated with the user; and
inertial measurement unit (IMU) data from an IMU sensor associated with the user;
and optionally includes one or more of:
a determination of whether the user is driving a car;
a determination that the user is not in a passenger seat of the car;
a determination that the user is approaching an object or another person.

12. The method of any preceding claim, wherein the first point in time is one or more of:
a time at a predetermined interval;
a time when the first instruction is received; and
a time when one or more sensors determine that the suppression condition is present.

13. The method of any preceding claim, further comprising:
while the head-wearable device is worn by the user:
while the head-wearable device is in the displayless state:
after obtaining the second instruction, causing another speaker, communicatively coupled to the head-wearable device, to present the nonvisual response based on the second instruction.

14. A non-transitory, computer-readable storage medium including executable instructions that, when executed by one or more processors, cause the one or more processors to:
while a head-wearable device, including a display and a speaker, is worn by a user:
cause the head wearable device to perform the method of any one of claims 1 to 13.

15. A system including:
a head-wearable device including a display and a speaker; and
one or more processors configured to:
while the head-wearable device is worn by a user:
cause the head wearable device to perform the method of any one of claims 1 to 13.
